# EUROPEAN PATENT APPLICATION

(11) **EP 4 239 000 A1**
(43) Date of publication of application: **06.09.2023**
(21) Application number: 21886181.3
(22) Date of filing: 26.10.2021
(51) Int. Cl.: C08F 20/20, C08F 20/26, C08G 59/50, H01B 3/30

(54) **COMPOSITION FOR FORMING LOW DIELECTRIC CONSTANT RESIN, LOW DIELECTRIC MEMBER, AND ELECTRONIC DEVICE USING SAME**

(30) Priority: 30.10.2020 JP 2020182129
(71) Applicant: JNC Corporation, Chiyoda-ku Tokyo 100-8105 (JP)
(72) Inventor: FUJIWARA, Takeshi, Tokyo 100-8105 (JP); SAGO, Koki, Tokyo 100-8105 (JP)
(74) Representative: Becker, Eberhard
(86) International application number: PCT/JP2021/039430
(87) International publication number: WO 2022/092063

(57) **Abstract**

The purpose of the present invention is to achieve a composition for forming a low dielectric constant resin which is suitable for use in a substrate for radar, next-generation communication devices and the like using higher frequencies, while having high heat dissipation properties. The present invention enables the achievement of a polymerizable composition, which is able to be molded by a solution process, while exhibiting thermal conductivity and low dielectric properties lower than those of conventional liquid crystal polymers, by curing a polymerizable polycyclic compound that has less conjugates or polar groups, while exhibiting higher linearity or symmetry of each molecule.

## Description

### [Technical Field]

The present invention relates to a composition for forming a low dielectric constant resin using a liquid crystal compound having a polymerizable group and a low dielectric member using the same. The present invention particularly relates to a material for a high frequency substrate and a peripheral material thereof, a low dielectric member using the same and an electronic device.

### [Background Art]

In recent years, with the shift of communication devices toward 5G and furthermore beyond 5G or 6G, the frequencies of electrical signals on electronic substrates or the frequencies of electric waves that are transmitted and received by antennas have also been increasing, and the loss of signals by signal-processing circuit boards or antenna substrates has been becoming a problem. Therefore, there has been a demand for a decrease in the dielectric constants and dielectric dissipation factors of resin materials that are in use for substrates, and, instead of conventional polyimides or epoxy resins, resins such as liquid crystal polymers (LCPs), polyphenylene ether (PPEs), cycloolefin polymers (COPs) and fluororesins (PTFEs) have begun to be used.

In low dielectric substrates, materials having a relative permittivity of 3.0 or less or 3.5 or less (if containing a highly thermal conductive filler) are lined up, and there is a demand for development of materials having a relative permittivity lower than above (non-patent document, RF World No. 40, p.p. 97 to 111, 2017).

However, current materials for high frequency substrates are thermoplastic resins and are difficult to use due to some aspects such as a necessity of molding or adhesion at high temperatures or poor adhesiveness between resins or to copper foils, which acts as electrodes. In Patent Literature 1, a study has been made to further decrease the dielectric constant of a liquid crystal polymer by studying the molecular structure of the liquid crystal polymer. However, the liquid crystal polymer has a high melting point and needs to be processed at a temperature of 350°C or higher, which makes thermal lamination, adhesion or the like difficult.

In Patent Literature 2, a study has been made to increase the solubility in solvents and thereby make a PPE resin into varnish by studying the molecular structure of the PPE resin. This makes it possible to produce a film of the PPE resin by an application method and to use the PPE resin for insulating varnish, but there are many problems in that it is necessary to use a solvent having high solvency and there is a possibility of the PPE resin being redissolved in solvents in the case of being laminated in multiple layers. Therefore, there is a demand for development of low dielectric constant resins that can be applied like varnish for insulation coating and simply cured.

Incidentally, since the amount of information processed with LSI for data processing also abruptly increases and, accordingly, the amount of heat generated also increases, there is a continuous demand for the heat dissipation properties of electronic substrates. Patent Literature 3 describes that, when a polymerizable liquid crystal compound having high linearity is oriented and cured, a larger amount of heat is conducted in the orientation direction than in normal thermosetting resins and Patent Literature 4 describes that, when a polymerizable liquid crystal compound is complexed with a heat-dissipating filler, it is possible to form a more highly thermal conductive thermosetting resin material. However, in these examples, the focus lies in an increase in thermal conductivity, and there are no studies regarding low dielectric properties.

### [Citation List]

### [Patent Literature]

[Patent Literature 1]
   Japanese Patent Laid-Open No. 2019-189734
[Patent Literature 2]
   Japanese Patent Laid-Open No. 2009-67894
[Patent Literature 3]
   Japanese Patent Laid-Open No. 2006-265527
[Patent Literature 4]
   Domestic Re-publication of PCT International Application No. 2015/170744

### [Summary of Invention]

### [Technical Problem]

As described above, the purpose of the present invention is to achieve a composition for forming a low dielectric constant resin which is suitable for use in radar, next-generation communication devices and the like using higher frequencies, while having high heat dissipation properties.

### [Solution to Problem]

The present inventor found that a polymerizable composition, which is able to be molded by a solution process, while exhibiting thermal conductivity and low dielectric properties lower than those of conventional liquid crystal polymers, can be achieved by curing a liquid crystal compound having a polymerizable group that has less conjugates or polar groups, while exhibiting higher linearity or symmetry of each molecule and completed the present invention.

Furthermore, molecules having high linearity often exhibit liquid crystals, and, in a case where the liquid crystallinity is exhibited in a wide temperature range, orientation treatments in that temperature region are easy, and it also becomes possible to control the orientation of the molecules as in the stretching treatments of thermoplastic resins.
[1] A first aspect of the present invention is
   a composition for forming a low dielectric constant resin that is a composition containing a liquid crystal compound having a polymerizable group at an end, which is represented by a formula (1), and relative permittivity at 10 GHz of a cured product of the composition is lower than 3.0.

      R^{1a}-Z¹-A¹-Z²-A²-(Z³-A³)ₘ₁-Z⁴-R^{1b} (1)
   In the formula (1),
      A¹, A² andA³ are independently 1,4-cyclohexylene, 1,4-cyclohexenylene, 1,4-phenylene, bicyclo[2.2.2]oct-1,4-diyl, bicyclo[3.1.0]hex-3,6-diyl or fluorene-2,7-diyl, in these rings, at least one -CH₂- is optionally replaced by -O-, at least one -CH= is optionally replaced by -N=, at least one hydrogen is a halogen or an alkyl having 1 to 12 carbon atoms in which at least one hydrogen is optionally replaced by a halogen, in this alkyl, at least one -CH₂- is optionally replaced by -O-, -CO-, -COO-, -OCO- or -C=C-;
      Z¹, Z², Z³ and Z⁴ are independently single bonds or alkylene having 1 to 20 carbon atoms, in this alkylene, at least one -CH₂- is optionally replaced by -O-, -S-, -CO-, -COO-, -OCO-, -SO₂-, -CH=CH-, -CF=CF-, -CH=N-, -N=CH- or -N=N-, at least one hydrogen is optionally replaced by a halogen;
      m1 is 0, 1 or 2,
      in a case where there is a plurality of Z³'s or A³'s in the formula, Z³'s or A³'s are optionally the same as or different from each other,
      R^{1a} and R^{1b} are independently groups selected from polymerizable groups represented by formulae (PG-1) to (PG-5), 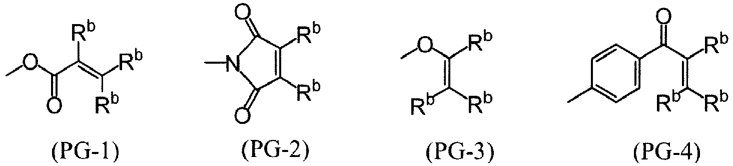 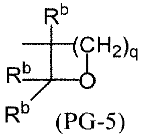
      in the formulae (PG-1) to (PG-5), R^{b} is hydrogen, a halogen, -CF₃ or an alkyl having 1 to 5 carbon atoms, q is 0 or 1, in a case where there is a plurality of R^{b}'s in the formula, R^{b}'s are optionally the same as or different from each other;
      in a case where A¹ and A² are 1,4-phenylene, Z² is a single bond, m is 0 and R^{1a} and R^{1b} are the polymerizable groups represented by the formula (PG-5), Z¹ and Z⁴ are alkylene having 3 to 20 carbon atoms, in these alkylene, at least one -CH₂- is optionally replaced by -O-, -S-, -CO-, -COO-, -OCO-, -SO₂-, -CH=CH-, -CF=CF-, -CH=N-, -N=CH- or -N=N-, and at least one hydrogen is optionally replaced by a halogen.
[2] A second aspect of the present invention is
   the composition for forming a low dielectric constant resin according to [1], in which, in the formula (1), R^{1a} and R^{1b} are independently polymerizable groups represented by the formula (PG-1) or (PG-5).
[3] A third aspect of the present invention is
   the composition for forming a low dielectric constant resin according to [1], containing a liquid crystal compound having a polymerizable group at an end, which is represented by any of formulae (1-1) to (1-3).

      R^{1a}-Z¹-A¹-Z²-A²-Z⁴-R^{1b} (1-1)

      R^{1a}-Z¹-A¹-Z²-A²-Z³-A³-Z⁴-R^{1b} (1- 2)

      R^{1a}-z¹-A¹-Z²-A²-Z³-A³-Z³-A³-Z⁴-R^{1b} (1-3)
   in the formulae (1-1) to (1-3),
      A¹, A² and A³ are independently 1,4-cyclohexylene, 1,4-phenylene in which at least one hydrogen is optionally replaced by a halogen or alkylene having 1 to 12 carbon atoms, bicyclo[2.2.2]oct-1,4-diyl, bicyclo[3.1.0]hex-3,6-diyl or fluorene-2,7-diyl in which at least one hydrogen is optionally replaced by a halogen or alkylene having 1 to 10 carbon atoms,
      Z¹, Z², Z³ and Z⁴ are independently single bonds, -(CH₂)ₐ-, -O(CH₂)ₐ-, -(CH2)aO-, - O(CH₂)ₐO-, -COO-, -OCO-, -CH=CH-COO-, -OCO-CH=CH-, -(CH2)a-COO-, -OCO-(CH₂)ₐ-, - CH=CH-, -SO₂-, -OCF₂- or -CF₂O-; here, a is an integer of I to 20,
      in a case where there is a plurality of Z³'s or A³'s in the formula, Z³'s or A³'s are optionally the same as or different from each other,
      R^{1a} and R^{1b} are independently polymerizable groups represented by the formula (PG-1) or (PG-5), 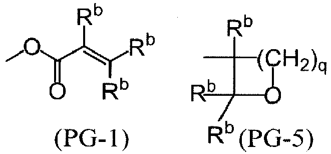
      in the formulae (PG-1) and (PG-5), R^{b} is hydrogen, a halogen, -CF₃ or an alkyl having 1 to 5 carbon atoms, q is 0 or 1, and, in a case where there is a plurality of R^{b}'s in the formula, R^{b}'s are optionally the same as or different from each other.
[4] A fourth aspect of the present invention is
   the composition for forming a low dielectric constant resin according to Claim 1, containing a liquid crystal compound having a polymerizable group at an end, which is represented by any of formulae (1-1-1) to (1-1-3). 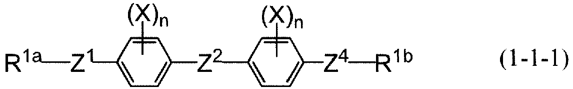 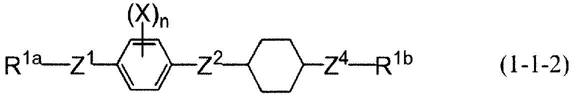 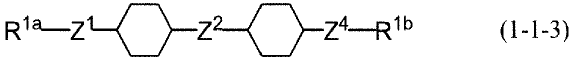
   in the formulae (1-1-1) to (1-1-3),
      Z¹, Z² and Z⁴ are independently single bonds, -(CH₂)ₐ-, -O(CH₂)ₐ-, -(CH₂)ₐO-, - O(CH₂)ₐO-, -COO-, -OCO-, -CH=CH-COO-, -OCO-CH=CH-, -(CH₂)ₐ-COO-, -OCO-(CH₂)ₐ-, - CH=CH-, -SO₂-, -OCF₂- or -CF₂O-; here, a is an integer of 1 to 20,
      X is fluorine or methyl,
      n is an integer of 0 to 4,
      in a case where there is a plurality of X's in the formula, including when n is 2 or more, X's are optionally the same as or different from each other,
      R^{1a} and R^{1b} are independently polymerizable groups represented by the formula (PG-1) or (PG-5), 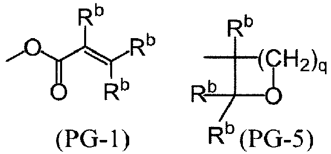
      in the formulae (PG-1) and (PG-5), R^{b} is hydrogen, a halogen, -CF₃ or an alkyl having 1 to 5 carbon atoms, q is 0 or 1, and, in a case where there is a plurality of R^{b}'s in the formula, R^{b}'s are optionally the same as or different from each other.
[5] A fifth aspect of the present invention is
   the composition for forming a low dielectric constant resin according to [1], containing a liquid crystal compound having a polymerizable group at an end, which is represented by any of formulae (1-2-1) to (1-2-6). 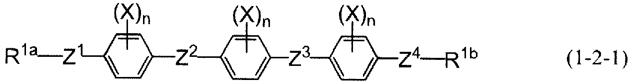 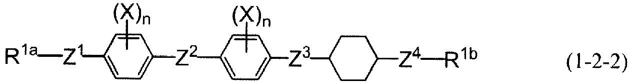 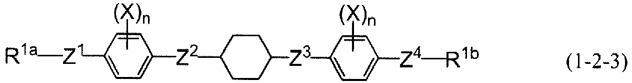 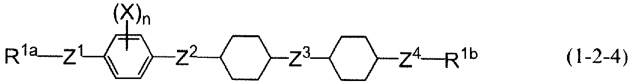 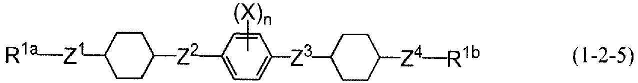 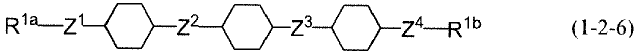
   in the formulae (1-2-1) to (1-2-6).
      Z¹, Z², Z³ and Z⁴ are independently single bonds, -(CH₂)ₐ-, -O(CH2)a-, -(CH₂)ₐO-, - O(CH₂)ₐO-, -COO-, -OCO-, -CH=CH-COO-, -OCO-CH=CH-, -CH₂CH₂-COO-, -OCO-CH₂CH₂-, -SO₂-, -CH=CH-, -OCF₂- or -CF₂O-; here, a is an integer of 1 to 20,
      X is fluorine or methyl,
      n is an integer of 0 to 4,
      in a case where there is a plurality of X's in the formula, including when n is 2 or more, X's are optionally the same as or different from each other,
      R^{1a} and R^{1b} are independently polymerizable groups represented by the formula (PG-1) or (PG-5). 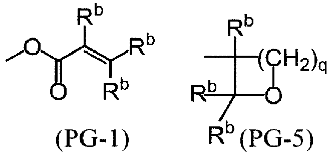
      in the formulae (PG-1) and (PG-5), R^{b} is hydrogen, a halogen, -CF₃ or an alkyl having 1 to 5 carbon atoms, q is 0 or 1, and, in a case where there is a plurality of R^{b}'s in the formula, R^{b}'s are optionally the same as or different from each other.
[6] A sixth aspect of the present invention is
   the composition for forming a low dielectric constant resin according to [1], containing a liquid crystal compound having a polymerizable group at an end, which is represented by any of formulae (1-3-1) to (1-3-9). 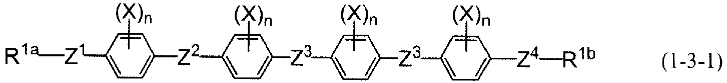 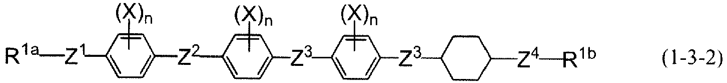 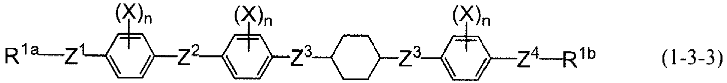 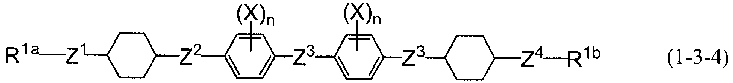 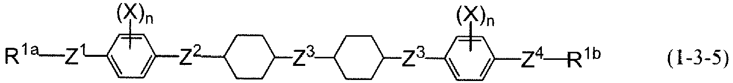 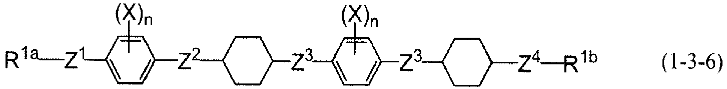 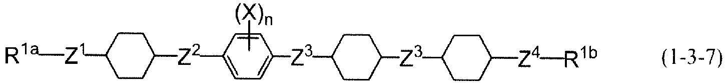 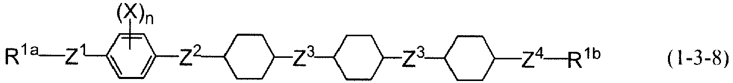 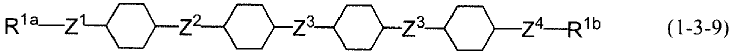
   in the formulae (1-3-1) to (1-3-9),
      Z¹, Z², Z³ and Z⁴ are independently single bonds, -(CH₂)ₐ-, -O(CH₂)ₐ-, -(CH₂)ₐO-, - O(CH₂)ₐO-, -COO-, -OCO-, -CH=CH-COO-, -OCO-CH=CH-, -(CH₂)ₐ-COO-, -OCO-(CH₂)ₐ-, - CH=CH-, -SO₂-, -OCF₂- or -CF₂O-; here, a is an integer of 1 to 20,
      Z³'s in the formula are optionally the same as or different from each other,
      X is fluorine or methyl,
      n is an integer of 0 to 4,
      in a case where there is a plurality of X's in the formula, including when n is 2 or more, X's are optionally the same as or different from each other,
      R^{1a} and R^{1b} are independently polymerizable groups represented by the formula (PG-1) or (PG-5),
      in the formulae (PG-1) and (PG-5), R^{b} is hydrogen, a halogen, -CF₃ or an alkyl having 1 to 5 carbon atoms, q is 0 or 1, and, in a case where there is a plurality of R^{b}'s in the formula, R^{b}'s are optionally the same as or different from each other.
[7] A seventh aspect of the present invention is
   the composition for forming a low dielectric constant resin according to [1], in which, in the formula (1), R^{1a} and R^{1b} are polymerizable groups represented by the formula (PG-1). 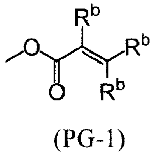
   In the formulae (PG-1), R^{b} is hydrogen, a halogen, -CF₃ or an alkyl having 1 to 5 carbon atoms, and, in a case where there is a plurality of R^{b}'s in the formula, R^{b}'s are optionally the same as or different from each other.
[8] An eighth aspect of the present invention is
   a compound represented by a formula (1-1-1a) or (1-2-1a), in which relative permittivity at 10 GHz of a cured product of a composition containing the compound becomes lower than 3.0. 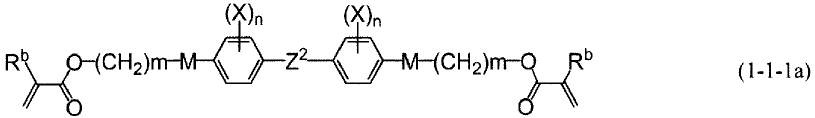 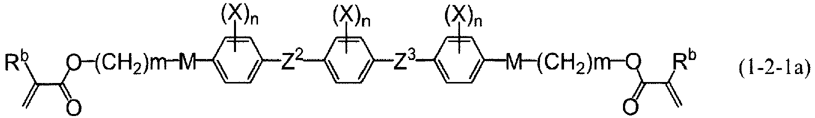
   In the formulae (1-1-1a) and (1-2-1a),
      R^{b} is hydrogen, a halogen, -CF₃ or an alkyl having 1 to 5 carbon atoms,
      Z² and Z³ are independently single bonds, -(CH₂)ₐ-, -O(CH₂)ₐ-, -(CH₂)ₐO-, -O(CH₂)ₐO-, - COO-, -OCO-, -CH=CH-COO-, -OCO-CH=CH-, -(CH₂)ₐ-COO-, -OCO-(CH₂)ₐ-, -CH=CH-, - SO₂-, -OCF₂- or -CF₂O-; here, a is an integer of 1 to 20,
      m is an integer of 0 to 20,
      M is a single bond or oxygen,
      X is fluorine or methyl,
      n is an integer of 0 to 4,
      in a case where there is a plurality of X's in the formula, including when n is 2 or more, X's are optionally the same as or different from each other, and
      in a case where there is a plurality of R^{b}'s, m's or M's in the formula, R^{b}'s, m's or M's are optionally the same as or different from each other.
[9] A ninth aspect of the present invention is
   a compound represented by a formula (1-1-2a), (1-1-3a), (1-2-5a) or (1-2-6a), in which relative permittivity at 10 GHz of a cured product of a composition containing the compound becomes lower than 3.0. 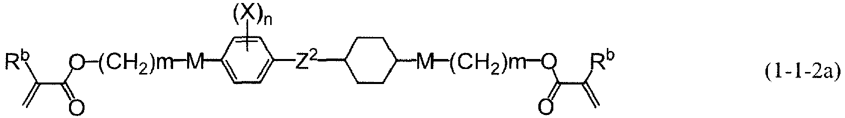 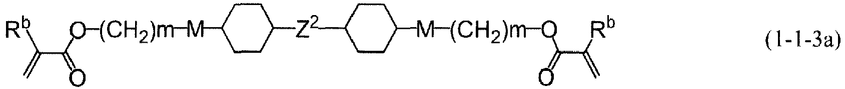 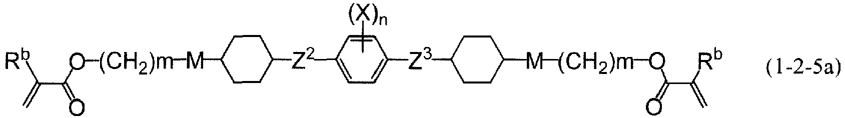 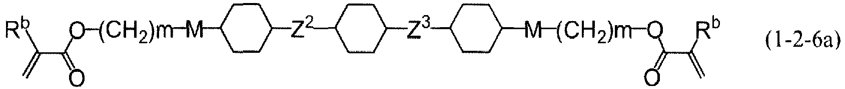
   In the formulae (1-1-2a), (1-1-3a), (1- 2-5a) and (1-2-6a),
      R^{b} is hydrogen, a halogen, -CF₃ or an alkyl having 1 to 5 carbon atoms, Z² and Z³ are independently single bonds, -(CH₂)ₐ-, -O(CH₂)ₐ-, -(CH₂)ₐO-, -O(CH₂)ₐO-, -COO-, -OCO-, - CH=CH-COO-, -OCO-CH=CH-, -(CH₂)ₐ-COO-, -OCO-(CH₂)ₐ-, -CH=CH-, -SO₂-, -OCF₂- or - CF₂O-; here, a is an integer of 1 to 20,
      m is an integer of 0 to 20,
      M is a single bond or oxygen,
      X is fluorine or methyl,
      n is an integer of 0 to 4,
      in a case where there is a plurality of X's in the formula, including when n is 2 or more, X's are optionally the same as or different from each other, and
      in a case where there is a plurality of R^{b}'s, m's or M's in the formula, R^{b}'s, m's or M's are optionally the same as or different from each other.
[10] A tenth aspect of the present invention is
   the composition for forming a low dielectric constant resin according to any one of [1] to [7], containing a non-polymerizable liquid crystal compound.
[11] An eleventh aspect of the present invention is
   the composition for forming a low dielectric constant resin according to any one of [1] to [7] and [10], containing an inorganic filling agent, in which thermal conductivity of a cured product of the composition is 1.0 W/m·K or more.
[12] A twelfth aspect of the present invention is
   the composition for forming a low dielectric constant resin according to any one of [1] to [7], [10] and [11], containing an inorganic oxide, in which thermal conductivity of a cured product of the composition is 1.0 W/m·K or more or
   the composition for forming a low dielectric constant resin according to any one of [1] to [7], [10] and [11], containing a nitride filling agent, in which thermal conductivity of a cured product of the composition is 10 W/m K.
[13] A thirteenth aspect of the present invention is
   the composition for forming a low dielectric constant resin according to [11], in which an inorganic filling material is at least one selected from aluminum nitride, boron nitride, silicon nitride, diamond, graphite, silicon carbide, magnesium oxide, aluminum oxide, zinc oxide, silicon oxide, titanium oxide, tin oxide, holmium oxide, calcium oxide, magnesium hydroxide, aluminum hydroxide, and cordierite and mullite.
[14] A fourteenth aspect of the present invention is
   the composition for forming a low dielectric constant resin according to [11], in which an inorganic filling material is aluminum nitride, boron nitride, silicon nitride, magnesium oxide, aluminum oxide, zinc oxide, silicon oxide, titanium oxide or magnesium hydroxide.
[15] A fifteenth aspect of the present invention is
   a low dielectric constant resin insulation film that is a polymer compact obtained by curing the composition for forming a low dielectric constant resin according to any one of [1] to [7] and [10] to [14] with heat or an ultraviolet ray.
[16] A sixteenth aspect of the present invention is
   a low dielectric constant resin film or low dielectric constant resin sheet that is a polymer compact obtained by curing the composition for forming a low dielectric constant resin according to any one of [1] to [7] and [10] to [14] with heat or an ultraviolet ray.
[17] A seventeenth aspect of the present invention is
   a low dielectric constant resin part that is a polymer compact obtained by curing the composition for forming a low dielectric constant resin according to any one of [1] to [7] and [10] to [14] with heat or an ultraviolet ray.
[18] An eighteenth aspect of the present invention is an electronic device using the polymer-forming body according to any one of [15] to [17].

### [Advantageous Effects of Invention]

The composition for forming a low dielectric constant resin having high linearity for a low dielectric member of the present invention has not only low dielectric properties but also high coatability, high heat dissipation properties, high transparency and excellent characteristics such as chemical stability, heat resistance, hardness and a mechanical strength and is thus suitable for, for example, low dielectric circuit boards, substrates for low dielectric antennas, low dielectric coated films, low dielectric adhesives and the like.

### [Description of Embodiments]

Hereinafter, a composition for forming a low dielectric constant resin of the present invention, a compound, an insulation film, a film and a production method of a resin part will be described in detail. How to use terms in the present specification is as described below.

"Liquid crystalline compound" is a collective term for compounds having a liquid crystal phase such as a nematic phase or a smectic phase and compounds that do not have a liquid crystal phase, but have physical properties peculiar to liquid crystals such as dielectric constant anisotropy, refractive index anisotropy and magnetic susceptibility anisotropy and are useful as a component of liquid crystal compositions. In addition, "(meth)acryloylxy" means acryloyloxy or methacryloyloxy, "(meth)acrylate" means acrylate or methacrylate and "(meth)acrylic acid" means acrylic acid or methacrylic acid.

The meaning of a phrase "at least one -CH₂- in an alkyl is optionally replaced by -O-, - CO- or the like" or the like will be described using an example. For example, a group in which at least one -CH₂- in C₄H₉- has been replaced by -O- or -CH=CH- is C₃H₇O-, CH₃-O-(CH₂)₃-, CH₃-O-CH₂-O-, H₂C=CH-(CH₂)₃-, CH₃-CH=CH-(CH₂)₂-, CH₃-CH=CH-CH₂-O- or the like. As described above, the term "at least one" means "at least one selected with no distinction." In consideration of the stability of compounds, CH₃-O-CH₂-O- where oxygen and oxygen are not adjacent to each other is preferable rather than CH₃-O-O-CH₂- where oxygen and oxygen are adjacent to each other.

"Compound (1)" means a liquid crystal compound represented by the above formula (1) and also means at least one compound represented by the formula (1) in some cases. This is also true for "compound (1-1)", and the compound (1-1) and a compound (1-2) are collectively represented by "compound (1)." "Composition (1)" means a liquid crystal composition containing at least one compound selected from the compound (1). "Polymer (1)" means a liquid crystal polymer obtained by polymerizing the composition (1). When one compound (1) has a plurality of A³'s, two arbitrary A's may be the same as or different from each other. When a plurality of the compounds (1) has A, two arbitrary A³'s may be the same as or different from each other. This rule also applies to other symbols, such as Z³, R^{b} and X, groups and the like.

### [Liquid Crystal Compound]

A compound (1) that is used in the present invention has a liquid crystal skeleton (rod-like mesogenic skeleton) and a polymerizable group and has high polymerization reactivity, a wide liquid crystal phase temperature range, favorable miscibility and the like. This compound (I) is likely to easily become homogeneous when mixed with a different liquid crystalline compound, polymerizable compound or the like.

When a terminal group R^{1a} or R^{1b}, a ring structure A¹, A² or A³ and a bonding group Z¹, Z², Z³ or Z⁴ of the compound (1) are appropriately selected, it is possible to arbitrarily adjust physical properties such as a liquid crystal phase development region. The effects of the kinds of the terminal group, the ring structure and the bonding group on the physical properties of the compound (1) and preferable examples thereof will be described below.

### <Terminal group R¹: R^{1a} and R^{1b}>

The terminal group R¹ of the compound (1) is a polymerizable group represented by any of formulae (PG-1) to (PG-5).

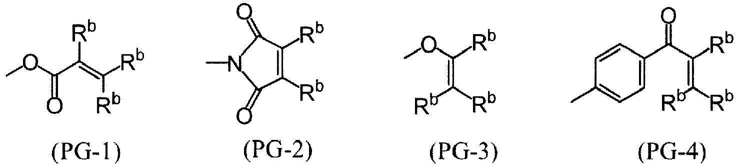

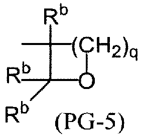

In the formulae (PG-1) to (PG-5), R^{1b} is hydrogen, a halogen, -CF₃ or an alkyl having 1 to 5 carbon atoms, and q is 0 or 1.

In addition, in a case where there is a plurality of R^{b}'s. R^{b}'s may be the same as or different from each other.

Preferable examples include polymerizable groups represented by formulae (PG-1a) to (PG-1d), (PG-2a), (PG-3a), (PG-4a) and (PG-5a) to (PG-5g).

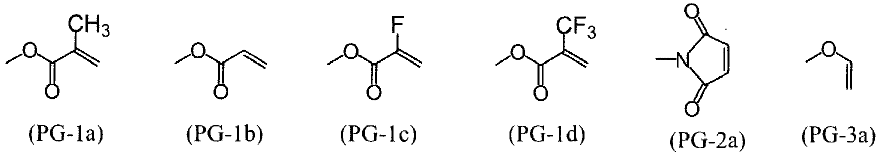

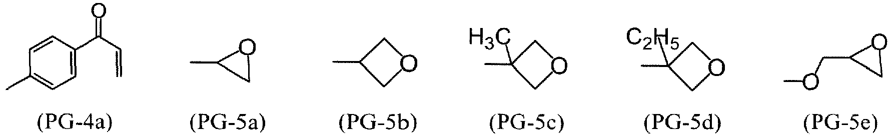

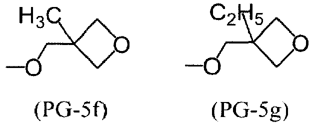

In these preferable polymerizable groups, (PG-1a) to (PG-ld), (PG-2a) and (PG-4a) have an α.β-unsaturated ketone structure and thus can be polymerized by a variety of means and can be changed to a polymer having a larger molecular weight. (PG-3a) has a vinyl group adjacent to an electron-donating group and thus can be polymerized by a variety of means and can be changed to a polymer having a larger molecular weight. (PG-5a) to (PG-5g) have a cyclic ether with strain and thus can be polymerized by a variety of means and can be changed to a polymer having a larger molecular weight.

As the polymerizable groups represented by (PG-1) to (PG-5), appropriate groups can be selected depending on the production conditions of a film. For example, in a case where a film is fabricated by normally-used light curing, an acryl group or methacryl group represented by the formula (PG-1) is preferable from the viewpoint of high curing properties, solubility in solvents, easy handling and the like.

### <Ring Structure A: A¹, A² or A³>

A preferable example of the ring structure A of the compound (1) is 1,4-cyclohexylene, 1,3-dioxane-2,5-diyl, 1,4-phenylene, 2-fluoro-1,4-phenylene, 2,3-difluoro-1,4-phenylene, 2.5-difluoro-1,4-phenylene, 2,6-difluoro-1,4-phenylene, pyridine-2,5-diyl, 3-fluoropyridine-2,5-diyl, pyrimidine-2,5-diyl, pyridazine-3,6-diyl, naphthalene-2,6-diyl, tetrahydronaphthalene-2,6-diyl, fluorene-2,7-diyl, 9-methylfluorene-2,7-diyl, 9,9-dimethylfluorene-2,7-diyl, 9-ethylfluorene-2,7-diyl, 9-fluorofluorene-2,7-diyl, 9,9-difluorofluorene-2,7-diyl or the like.

A more preferable example is 1,4-cyclohexylene, 1,4-phenylene, 2-fluoro-1,4-phenylene, 2-methyl-1,4-phenylene or the like. A particularly preferable example is 1,4-cyclohexylene or 1,4-phenylene.

The configuration of 1,4-cyclohexylene, 1,3-dioxane-2,5-diyl or tetrahydronaphthalene-2,6-diyl is preferably trans rather than cis. 2-Fluoro-1,4-phenylene and 3-fluoro-1,4-phenylene are structurally the same as each other, and thus the latter will not be exemplified. This rule also applies to the relationship of 2,5-difluoro-1,4-phenylene and 3,6-difluoro-1,4-phenylene or the like.

In a case where at least one ring in the ring structure A is 1,4-phenylene, the orientational order parameter and the magnetization anisotropy are large. In addition, in a case where at least two rings are 1,4-phenylene, the temperature range of a liquid crystal phase is wide, and the clearing point is high.

A preferable example of at least one hydrogen on the 1,4-phenylene ring being optionally replaced is fluorine, an alkyl having 1 to 5 carbon atoms, -CF₃, -OCF₃ or the like, the melting point lowers, and the solubility is high. In addition, the molecular polarizability becomes small, and thus the relative permittivity is low. Furthermore, molecular motions are suppressed, and thus the dielectric loss is low.

In a case where at least one ring is 1,4- cyclohexylene, the clearing point is high, the relative permittivity is extremely low, the dielectric loss is low, and the viscosity is small. In addition, in a case where at least two rings are 1,4-cyclohexylene, the clearing point is high, the relative permittivity is extremely low, the dielectric loss is low, and the viscosity is small.

In a case where at least one ring is a condensed ring such as a naphthalene ring, a decahydronaphthalene ring or a fluorene ring, the molecular volume is large, and the relative permittivity is low.

### <Bonding Group Z: Z¹, Z², Z³ or Z⁴>

A preferable example of the bonding group Z of the compound (1) is a single bond, - (CH₂)ₐ-, -O(CH₂)ₐ-, -(CH₂)ₐO-, -O(CH₂)ₐO-, -COO-, -OCO-, -CH=CH-COO-, -OCO-CH=CH-, - (CH₂)ₐ-COO-, -OCO-(CH₂)ₐ-, -CH=CH-, -SO₂-, -OCF₂- or -CF₂O-; here, a is an integer of 1 to 20.

A more preferable example is a single bond, -(CH₂)ₐ-, -(CH₂)ₐO-, -O(CH2),-, -O(CH₂)ₐO-, -COO-, -OCO- or the like.

A particularly preferable example is a single bond, -(CH₂)ₐ-, -(CH₂)ₐO-, -O(CH2)a- or - O(CH₂)ₐO-; here, a is an integer of 1 to 20.

In a case where the bonding group Z is a single bond, -(CH₂)ₐ-, -(CH₂)ₐO-, -O(CH₂)ₐ-, - O(CH₂)ₐO-, -CF₂O- or -OCF₂-, the viscosity becomes small. In addition, in a case where the bonding group Z is -(CH₂)ₐ-, -(CH₂)ₐO-, -O(CH₂)ₐ- or -O(CH₂)ₐO- and a is approximately 2 to 12, the melting point lowers, the solubility in organic solvents is high and the molecular length becomes long, and thus the temperature range of a liquid crystal phase becomes wide, and the dielectric dissipation factor is small.

When the compound (1) has two rings, the viscosity is low, and, when the compound (1) has three or more rings, the clearing point is high. In the present specification, basically, six-membered rings, condensed rings including a six-membered ring and the like will be regarded as rings, and, for example, three-membered rings, four-membered rings and five-membered rings on their own are not regarded as rings. In addition, a condensed ring such as a naphthalene ring, a decahydronaphthalene ring or a fluorene ring is regarded as a single ring.

As described above, when the kinds of the terminal group R^{a}, the ring structure A and the bonding group Z, the number of rings and the like are appropriately selected, it is possible to obtain compounds having intended physical properties. Examples of a preferable compound (1) include formulae (1-1-1) to (1-1-3), (1-2-1) to (1-2-6) and (1-3-1) to (1-3-6).

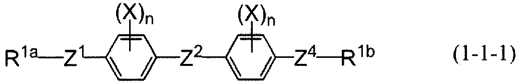

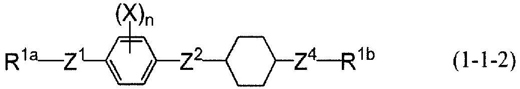

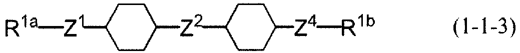

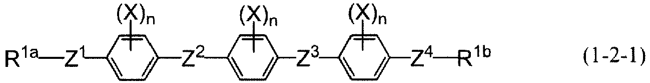

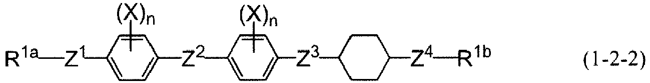

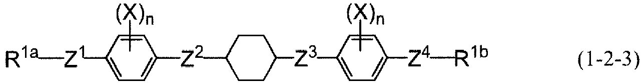

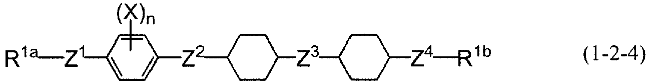

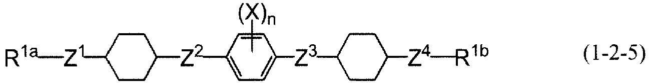

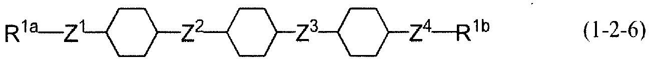

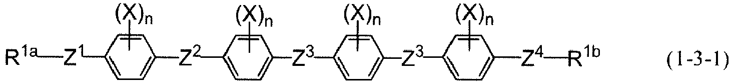

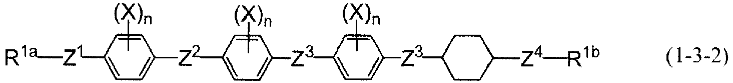

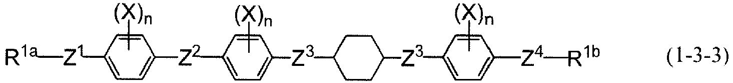

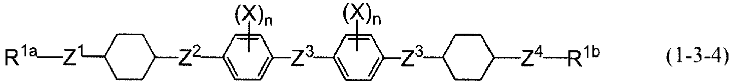

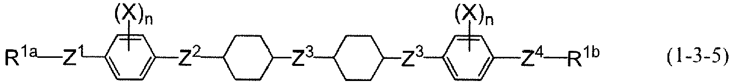

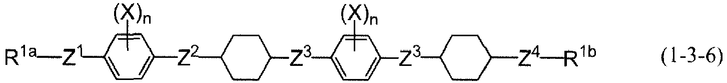

In the formulae (1-1-1) to (1-1-3), (1-2-1) to (1-2-6) and (1-3-1) to (1-3-6),
Z¹, Z², Z³ and Z⁴ are independently single bonds, -(CH₂)ₐ-, -O(CH₂)ₐ-, -(CH₂)ₐO-, - O(CH₂)ₐO-,, -COO-, -OCO-, -CH=CH-COO-, -OCO-CH=CH-, -(CH₂)ₐ-COO-, -OCO-(CH₂)ₐ-, - CH=CH-, -SO₂-, -OCF₂- or -CF₂O-; here, a is an integer of 1 to 20,
Z³'s in the formula are optionally the same as or different from each other,
X is fluorine or methyl,
n is an integer of 0 to 4,
in a case where there is a plurality of X's in the formula, including when n is 2 or more, X's are optionally the same as or different from each other,
R^{1a} and R^{1b} are independently polymerizable groups represented by the formula (PG-1) or (PG-5), 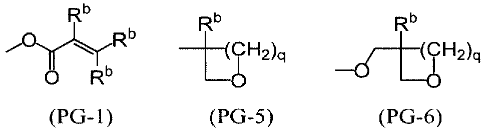
in the formulae (PG-1) and (PG-5), R^{b} is hydrogen, a halogen, -CF₃ or an alkyl having 1 to 5 carbon atoms, q is 0 or 1, and, in a case where there is a plurality of R^{b}'s in the formula, R^{b}'s are optionally the same as or different from each other.

More preferable specific examples of the compound (1) will be described below.

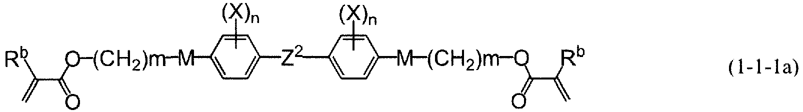

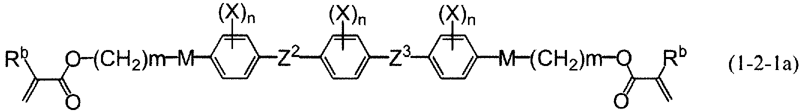

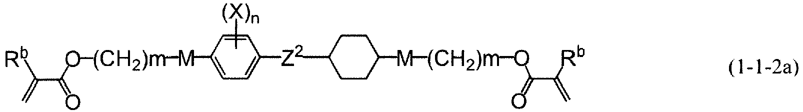

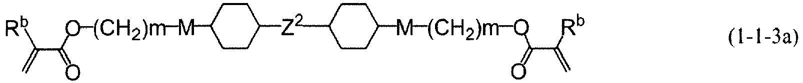

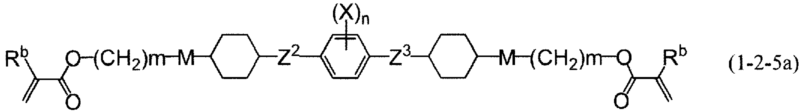

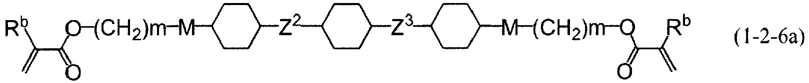

In the formulae (1-1-1a) to (1-1-3a), (1-2-1a), (1-2-5a) and (1-2-6a),
R^{b} is hydrogen, fluorine, -CF₃ or an alkyl having 1 to 5 carbon atoms,
Z² and Z³ are independently single bonds, -(CH₂)ₐ-, -O(CH₂)ₐ-, -(CH₂)ₐO-, -O(CH₂)ₐO-, - COO-, -OCO-, -CH=CH-COO-, -OCO-CH=CH-, -(CH2)a-COO-, -OCO-(CH2)a-, -CH=CH-, - SO₂-, -OCF₂- or -CF₂O-; here, a is an integer of 1 to 20,
m is an integer of 0 to 20,
M is a single bond or oxygen,
X is fluorine or methyl,
n is an integer of 0 to 4,
in a case where there is a plurality of X's in the formula, including when n is 2 or more, X's are optionally the same as or different from each other,
in a case where there is a plurality of R^{b}'s, m's or M's in the formula, R^{b}'s, m's or M's are optionally the same as or different from each other.

### [Synthesis Method of Compound (1)]

The compound (1) can be synthesized by combining methods that are well known in synthetic organic chemistry. Methods for introducing intended terminal group, ring structure and bonding group into a starting material are described in books such as Houben-Wyle - Methods of Organic Chemistry (Georg Thieme Verlag, Stuttgart), Organic Syntheses (John Wily & Sons, Inc.), Organic Reactions (John Wily & Sons, Inc.), Comprehensive Organic Synthesis (Pergamon Press), New Experimental Chemistry Course (Maruzen Co., Ltd.) and the like.

An introduction method of the bonding group Z will be described with the following schemes 1 to 9. In these schemes, MSG¹ and MSG² indicate monovalent organic groups having at least one ring, and Hal indicates a halogen. A plurality of MSG¹'s (or MSG²'s) used in the following schemes may be the same as or different from each other. Compounds (1A) to (1M) in the following schemes correspond to the compound (1). These methods can be applied to the synthesis of an optically active compound (1) and an optically inactive compound (1).

### (Scheme 1) Compound Where Z is Single Bond

As shown below, aryl borate (S1) and a compound (S2) that is synthesized by a well-known method are reacted with each other in the presence of a carbonate aqueous solution and a catalyst such as tetrakis(triphenylphosphine)palladium, whereby a compound (1A) in which a single bond has been introduced between MSG¹ and MSG² can be synthesized. This compound (1A) can also be synthesized by reacting n-butyl lithium and then zinc chloride with a compound (S3) that is synthesized by a well-known method and then further reacting the compound (S2) in the presence of a catalyst such as dichlorobis(triphenylphosphine)palladium.

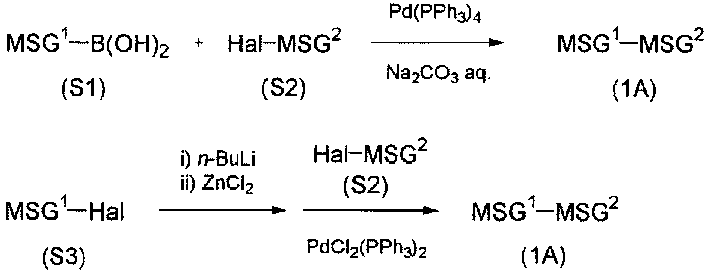

### (Scheme 2) Compound Where Z is -CH=CH-

As shown below, phosphorus ylide generated by acting a base such as potassium t-butoxide on a phosphonium salt (S5) that is synthesized by a well-known method and an aldehyde (S4) are reacted with each other, whereby a compound (1B) in which -CH=CH- has been introduced between MSG¹ and MSG² can be synthesized. Depending on the reaction conditions and a substrate, a cis form is generated, and thus, if necessary, the cis form is isomerized into a trans form by a well-known method.

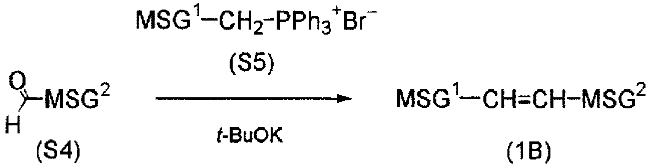

### (Scheme 3) Compound Where Z is -(CH₂)₂-

As shown below, the compound (1B) obtained as described above is hydrogenated in the presence of a catalyst such as palladium on carbon, whereby a compound (1C) having -(CH₂)₂-between MSG¹ and MSG² can be synthesized.

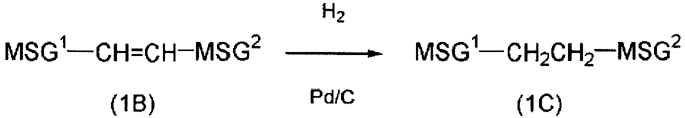

### (Scheme 4) Compound Where Z is -(CF₂)₂-

As shown below, a diketone (S6) is fluorinated with sulfur tetrafluoride in the presence of a hydrogen fluoride catalyst according to a method described in J. Am. Chem. Soc., 2001, 123, 5414, whereby a compound (1D) having -(CF₂)₂- between MSG¹ and MSG² can be synthesized.

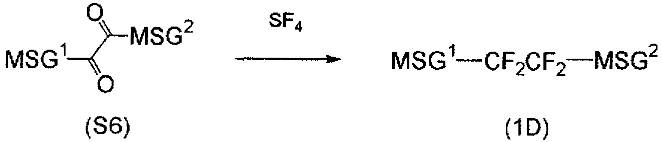

### (Scheme 5) Compound Where Z is -(CH₂)₄-

As shown below, a compound having -(CH₂)₂-CH=CH- is synthesized using a phosphonium salt (S7) instead of a phosphonium salt (S5) according to the method of the scheme 2, and this is hydrogenated in the presence of a catalyst in the same manner as in the scheme 3, whereby a compound (1E) in which -(CF₂)₄- has been introduced between MSG¹ and MSG² can be synthesized.

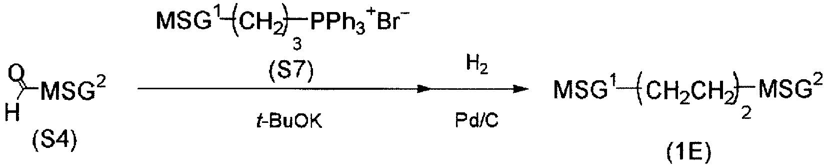

### (Scheme 6) Compound Where Z is -CHzO- or -OCH₂-

As shown below, a compound (S4) is reduced with a reducing agent such as sodium borohydride to obtain a compound (S8). This is halogenated with hydrobromic acid or the like to obtain a compound (S9). This compound (S9) and a compound (S10) are reacted with each other in the presence of potassium carbonate or the like, whereby a compound (1F) in which - OCH₂- (or -CH₂O-) has been introduced between MSG¹ and MSG² can be synthesized.

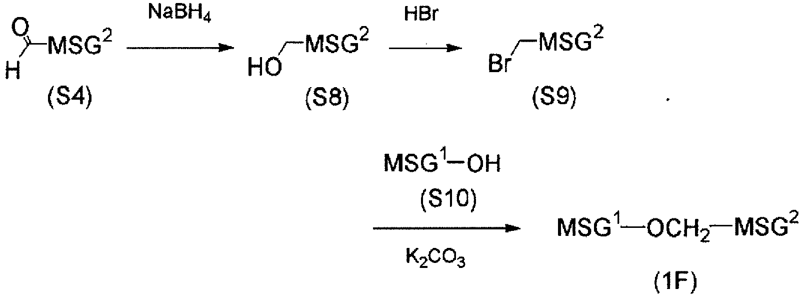

### (Scheme 7) Compound Where Z is -COO- or -OCO-

As shown below, n-butyl lithium and, subsequently, carbon dioxide are reacted with the compound (S3) to obtain carboxylic acid (S11). A dehydration reaction of this compound (S11) and phenol (S10) is performed in the presence of DCC (1,3-dicyclohexylcarbodiimide) and DMAP (4-dimethylaminopyridine), whereby a compound (1G) in which -COO- (or -OCO-) has been introduced between MSG¹ and MSG² can be synthesized.

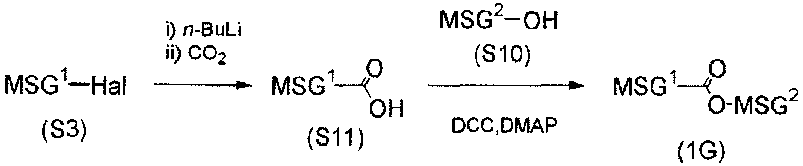

### (Scheme 8) Compound Where Z is -CF=CF-

As shown below, the compound (S3) is treated with n-butyl lithium and then reacted with tetrafluoroethylene to obtain a compound (S12). Next, the compound (S2) is treated with n-butyl lithium and then reacted with a compound (S 12), whereby a compound (1H) in which -CF=CF-has been introduced between MSG¹ and MSG² can be synthesized. It is also possible to produce a cis-form compound by selecting the synthesis conditions.

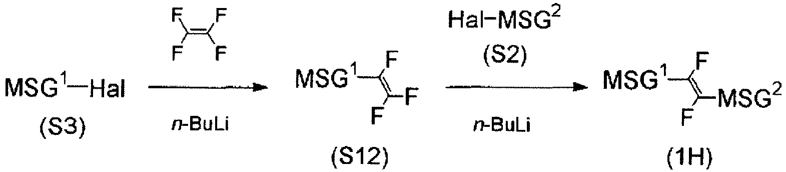

### (Scheme 9) Compound Where Z is -CF₂O- or -OCF₂-

As shown below, the compound (1G) obtained by a method such as the scheme 7 is treated with a sulfurizing agent such as a Lawesson's reagent to obtain a compound (S16). This compound (S16) is fluorinated with a pyridine hydrofluoride complex and N-bromosuccinimide (NBS), whereby a compound (1M) having -CF₂O- (or -OCF₂-) between MSG¹ and MSG² can be synthesized. In addition, the compound (1M) can also be synthesized by fluorinating the compound (S16) with (diethylamino)sulfur trifluoride (DAST). In addition, it is also possible to generate these bonding groups by a method described in P. Kirsch et al., Angew. Chem. Int. Ed. 2001, 40, 1480.

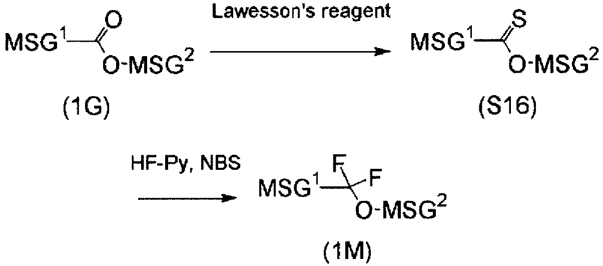

### [Liquid Crystal Composition]

The composition (1) in the present invention contains at least one compound (1) and is composed of two or more compounds. That is, the composition (1) may be composed of two or more compounds (1) or may be composed of a combination of at least one compound (1) and at least one compound other than the compound (1). Such a configuration element other than the compound (1) is not particularly limited, and examples thereof include polymerizable compounds other than the compound (1) (hereinafter, also referred to as "other polymerizable compounds"), non-polymerizable liquid crystalline compounds, optically active compounds, polymerization initiators, solvents, filling materials and the like.

### <Other Polymerizable Compounds>

The composition (1) may contain other polymerizable compounds as a configuration element. As such polymerizable compounds, compounds that do not degrade film-forming properties and a mechanical strength are preferable. These polymerizable compounds are classified into compounds not having liquid crystallinity and compounds having liquid crystallinity. Examples of the polymerizable compounds not having liquid crystallinity include vinyl derivatives, styrene derivatives, (meth)acrylic acid derivatives, sorbic acid derivatives, fumaric acid derivatives, itaconic acid derivatives and the like. Preferable examples of these derivatives will be described below.

Examples of preferable vinyl derivatives include vinyl chloride, vinyl fluoride, vinyl acetate, vinyl pivalate, vinyl 2,2-dimethylbutanoate, vinyl 2,2-dimethylpentanoate, vinyl 2-methyl-2-butanoate, vinyl propionate, vinyl stearate, vinyl 2-ethyl-2-methylbutanoate, N-vinylacetamide, vinyl p-t-butylbenzoate, vinyl N,N-dimethylaminobenzoate, vinyl benzoate, ethyl vinyl ether, hydroxybutyl monovinyl ether, t-amyl vinyl ether, cyclohexane dimethanol methyl vinyl ether, α,β-vinyl naphthalene, methyl vinyl ketone, isobutyl vinyl ketone and the like.

Examples of preferable styrene derivatives include styrene, o-chlorostyrene, m-chlorostyrene, p-chlorostyrene, o-chloromethylstyrene, m-chloromethylstyrene, p-chloromethylstyrene, α-methylstyrene and the like.

Examples of preferable (meth)acrylic acid derivatives include methyl (meth)acrylate, ethyl (meth)acrylate, butyl (meth)acrylate, 2-ethylhexyl (meth)acrylate, phenyl (meth)acrylate, 1,4-butanediol diacrylate, 1,6-hexanediol diacrylate, 1,9-nonanediol diacrylate, neopentyl glycol diacrylate, triethylene glycol diacrylate, dipropylene glycol diacrylate, tripropylene glycol diacrylate, tetraethylene glycol diacrylate, trimethylolpropane triacrylate, ethoxylated trimethylol triacrylate, pentaerythritol triacrylate, trisacryloyloxyethyl phosphate, ethoxylated bisphenol A diacrylate, bisphenol A glycidyl diacrylate (trade name: "VISCOAT 700" manufactured by Osaka Organic Chemical Industry Ltd.), polyethylene glycol diacrylate dimethyl itaconate and the like.

Examples of preferable sorbic acid derivatives include sodium sorbate, potassium sorbate, lithium sorbate, 1-naphthylmethylammonium sorbate, benzylammonium sorbate, dodecyl ammonium sorbate, octadecyl ammonium sorbate, methyl sorbate, ethyl sorbate, propyl sorbate, isopropyl sorbate, butyl sorbate, t-butyl sorbate, hexyl sorbate, octyl sorbate, octadecyl sorbate, cyclopentyl sorbate, cyclohexyl sorbate, vinyl sorbate, allyl sorbate, propargyl sorbate and the like.

Examples of preferable fumaric acid derivatives include dimethyl fumarate, diethyl fumarate, diisopropyl fumarate, dibutyl fumarate, dicyclopentyl fumarate, dicyclohexyl fumarate and the like.

Examples of preferable itaconic acid derivatives include diethyl itaconate, dibutyl itaconate, diisopropyl itaconate and the like.

Additionally, a number of polymerizable compounds such as butadiene, isoprene and maleimide can be used.

### <Other Polymerizable Liquid Crystal Compounds>

The composition (1) may contain a polymerizable liquid crystal compound other than the compound (1). From the viewpoint of the development of a liquid crystal phase of the polymerizable liquid crystal composition and the compatibility between the compound (1) and organic solvents and the like, a compound represented by a formula (M1), (M2) or (M3) is preferable as the polymerizable liquid crystal compound.

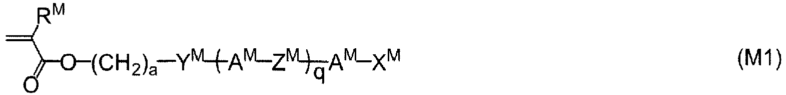

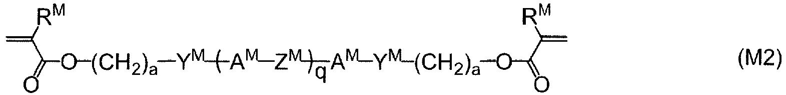

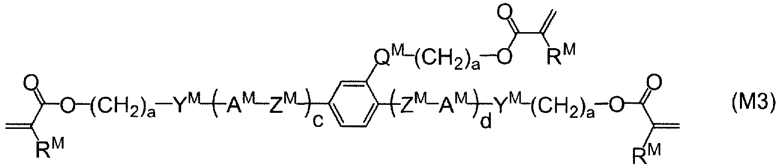

In the formulae (M1), (M2) and (M3),
A^{M} is independently any divalent group selected from 1,4-phenylene, 1,4-cyclohexylene, 1,4-cyclohexenylene, pyridine-2,5-diyl, 1,3-dioxane-2,5-diyl, naphthalene-2,6-diyl or fluorene-2,7-diyl, in the divalent group, at least one hydrogen may be replaced by fluorine, chlorine, cyano, hydroxy, formyl, trifluoroacetyl, difluoromethyl, trifluoromethyl, alkyl having 1 to 5 carbon atoms, alkoxy having 1 to 5 carbon atoms, alkoxycarbonyl having 1 to 5 carbon atoms or alkanoyl having 1 to 5 carbon atoms,
Z^{M} is independently a single bond, -OCH₂-, -CH₂O-, -COO-, -OCO-, -COS-, -SCO-, - OCOO-, -CONH-, -NHCO-, -CF₂O-, -OCF₂-, -CH₂CH₂-, -CF₂CF₂-, -CH=CHCOO-, - OCOCH=CH-, -CH₂CH₂COO-, -OCOCH₂CH₂-, -COOCH₂CH₂-, -CH₂CH₂OCO-, -CH=CH-, - N=CH-. -CH=N-, -N=C(CH₃)-, -C(CH₃)=N-, -N=N-, -C=C-, -CH=N-N=CH- or -C(CH₃)=N-N=C(CH₃)-,
X^{M} is hydrogen, fluorine, chlorine, trifluoromethyl, trifluoromethoxy, cyano, an alkyl having 1 to 20 carbon atoms, alkenyl having 1 to 20 carbon atoms, alkoxy having 1 to 20 carbon atoms or alkoxycarbonyl having 1 to 20 carbon atoms,
Y^{M} is independently a single bond, -O-, -COO-, -OCO- or -OCOO-,
Q^{M} is a single bond, -O-, -COO- or -OCO-,
q is an integer of 1 to 6,
c and d are independently an integer of 0 to 3 and have a relationship of 1 ≤ c + d ≤ 6, and a is an integer of 0 to 20, and
R^{M} is hydrogen or methyl.

### <Non-Polymerizable Liquid Crystalline Compound>

The composition (1) may contain a liquid crystalline compound having no polymerizable groups as a configuration element. Examples of such a non-polymerizable liquid crystalline compound are described in LiqCryst (LCI Publisher GmbH, Hamburg, Germany), which is database of liquid crystalline compounds, or the like. Polymerization of the composition (1) containing the non-polymerizable liquid crystalline compound makes it possible to obtain composite materials of a polymer of the compound (1) and a liquid crystalline compound. In such composite materials, the non-polymerizable liquid crystalline compound is present in, for example, a polymer network such as polymer dispersed liquid crystals.

### <Polymerization Initiator>

The composition (1) may contain a polymerization initiator as a configuration element. As the polymerization initiator, for example, a radical photopolymerization initiator, a cationic photopolymerization initiator, an initiator for thermal radical polymerization or the like may be used depending on the polymerization method of the composition (1).

The radical photopolymerization initiator is not particularly limited, and well-known initiators can be used, and
examples thereof include 4-methoxyphenyl-2,4-bis(trichloromethyl)triazine, 2-(4-butoxystyryl)-5-trichloromethyl-1,3,4-oxadiazole, 9-phenylacridine, 9,10-benzphenazine, benzophenone/Michlerls ketone mixtures, hexaarylbiimidazole/mercaptobenzimidazole mixtures, 1-(4-isopropylphenyl)-2-hydroxy-2-methylpropan-1-one, benzyldimethylketal, 2-methyl-1-[4-(methylthio)phenyl]-2-morpholinopropan-1- one, 2,4-diethyl xanthone/methyl p-dimethylaminobenzoate mixtures, benzophenone/methyltriethanolamine mixtures and the like. Examples of commercially available products include "DAROCUR Series 1173, 4265", "IRGACURE Series 184, 369, 500, 651, 784, 819, 907, 1300, 1700, 1800, 1850, 2959" manufactured by Ciba Specialty and the like.

The cationic photopolymerization initiator is not particularly limited, well-known inhibitors can be used, and examples thereof include "CYRACURE UVI-6990, 6974" manufactured by UCC Co., Ltd., "ADEKA OPTOMER SP-150, 152, 170, 172" manufactured by Asahi Denka K.K., "Photoinitiator 2074" manufactured by Rhodia Co., Ltd., "IRGACURE 250" manufactured by Ciba Specialty, "DTS-102" manufactured by Midori Kagaku Co., Ltd. and the like.

Examples of preferable initiators for thermal radical polymerization include benzoyl peroxide, diisopropylperoxydicarbonate, t-butylperoxy-2-ethylhexanoate, t-butylperoxypivalate, di-t-butylperoxide (DTBPO), t-butylperoxydiisobutyrate, lauroyl peroxide, dimethyl 2,2'-azobisisobutyrate (MAIB), azobisisobutyronitrile (AIBN), azobiscyclohexanecarbonitrile (ACN) and the like.

Examples of preferable initiators for anionic polymerization, coordination polymerization and living polymerization include alkali metal alkyl compounds such as n-C₄H₉Li and t-C₄H₉Li-R₃Al, aluminum compounds, transition metal compounds and the like.

### <Curing Agent>

In the case of containing a compound having a cyclic ether group as a configuration element, the composition (1) may contain a curing agent as a configuration element. Examples of preferable curing agents will be described below.

Examples of amine-based curing agents include diethylenetriamine, triethylenetetramine, tetraethylenepentamine, o-xylenediamine, m-xylenediamine, p-xylenediamine, trimethylhexamethylenediamine, 2-methylpentamethylenediamine, diethylaminopropylamine, isophoronediamine, 1,3-bisaminomethylcyclohexane, bis(4-amino-3-methylcyclohexyl)methane, bis(4-aminocyclohexyl)methane, norbornenediamine, 1,2-diaminocyclohexane, 3,9-dipropanamine-2,4,8,10-tetraoxaspiro[5,5]undecane, 4,4'-diaminodiphenylmethane, 4,4'-diamino-1,2-diphenylethane, o-phenylenediamine, m-phenylenediamine, p-phenylenediamine, 4,4'-diaminodiphenylsulfone, polyoxypropylenediamine, polyoxypropylenetriamine, polycyclohexylpolyamine, N-aminoethylpiperazine and the like.

Examples of acid anhydride-based curing agents include tetrahydrophthalic anhydride, hexahydrophthalic anhydride, methyltetrahydrophthalic anhydride, methylhexahydrophthalic anhydride, methylnadic anhydride, hydrogenated methylnadic anhydride, trialkyltetrahydrophthalic anhydride, methylcyclohexenetetracarboxylic dianhydride, phthalic anhydride, trimellitic anhydride, pyromellitic anhydride, benzophenonetetracarboxylic dianhydride, ethylene glycol bisanhydrotrimellitate, glycerin bis(anhydrotrimellitate) monoacetate, dedecenyl succinic anhydride, chlorendic anhydride and the like.

Examples of phenolic curing agents include phenol, o-cresol, m-cresol, p-cresol, 2,3-xylenol, 2,5-xylenol, 2,6-xylenol, 3,4-xylenol, 3,5-xylenol, m-ethylphenol, p-ethylphenol, 2,3,5-trimethylphenol, 2,3,6-trimethylphenol, o-isopropylphenol, p-tert-butylphenol, o-sec-butylphenol, p-octylphenol, 2,6-di-tert-butylphenol, resorcinol, 1-naphthol, 2-naphthol, bisphenol A, phenol novolac, xylylene novolac, bisphenol A novolac and the like.

Additionally, curing agents described in Japanese Patent Laid-Open No. 2004-256687, Japanese Patent Laid-Open No. 2002-226550 and the like can also be used.

Active ester-based curing agents are not particularly limited, well-known curing agents can be used, examples thereof include "HPC-8000H-65T" manufactured by DIC Corporation as an active ester compound having a dicyclopentadiene-type diphenol structure, "EXB-8150-65T" manufactured by DIC Corporation as an active ester compounds having a naphthalene structure, "DC808" manufactured by Mitsubishi Chemical Corporation as an active ester compound containing an acetyl compound of phenol novolac, "YLH1026" manufactured by Mitsubishi Chemical Corporation as an active ester compound containing a benzoyl compound of phenol novolac, "DC808" manufactured by Mitsubishi Chemical Corporation as an active ester-based curing agent, which is an acetylate of phenol novolac, "YLH1026" manufactured by Mitsubishi Chemical Corporation as an active ester-based curing agent, which is a benzoylated compound of phenol novolac and the like.

In addition, examples of curing accelerators include cycloamidine compounds such as 1,8-diazabicyclo[5.4.0]-7-undecene (DBU), 1,5-diazabicyclo[4.3.0]-5-nonene and 5,6-dibutylamino-1,8-diazabicyclo[5.4.0]-7-undecene; compounds having intramolecular polarization formed by adding a compound having a π bond such as a quinone compound such as maleic anhydride, 1,4-benzoquinone, 2,5-toluquinone, 1,4-naphthoquinone, 2,3-dimethylbenzoquinone, 2,6-dimethylbenzoquinone, 2,3-dimethoxy-5-methyl-1,4-benzoquinone, 2,3-dimethoxy-1,4-benzoquinone or phenyl-1,4-benzoquinone, diazophenylmethane or a phenolic resin to the cycloamidine compounds; tertiary amine compounds such as benzyldimethylamine, triethanolamine, dimethylaminoethanol and tris(dimethylaminomethyl)phenol; derivatives of the tertiary amine compounds; imidazole compounds such as 2-methylimidazole, 2-phenylimidazole and 2-phenyl-4-methylimidazole; derivatives of the imidazole compounds; organic phosphine compounds such as tributylphosphine, methyldiphenylphosphine, triphenylphosphine, tris(4-methylphenyl)phosphine, diphenylphosphine and phenylphosphine; phosphorus compounds having intramolecular polarization formed by adding a compound having a π bond such as maleic anhydride, the quinone compound, diazophenylmethane or a phenolic resin to the organic phosphine compounds; sodium tetraphenylborate such as tetraphenylphosphonium tetraphenylborate, triphenylphosphine tetraphenylborate, 2-ethyl-4-methylimidazole tetraphenylborate and N-methylmorpholine tetraphenylborate; derivatives of the sodium tetraphenylborate; adducts of a phosphine compound such as triphenylphosphonium-triphenylborane or N-methylmorpholine tetraphenylphosphonium-tetraphenylborate and the sodium tetraphenylborate and the like.

### <Inorganic Filler as Filling Material>

In order for improvement in thermal conductivity, improvement in the mechanical strength, adjustment of the viscosity and the like, a filling material (inorganic filler) can be added. For example, a filling agent having high thermal conductivity may be a metal nitride such as aluminum nitride, boron nitride or silicon nitride, a carbide such as diamond, graphite or silicon carbide, a metal oxide such as magnesium oxide, aluminum oxide, zinc oxide, silicon oxide, titanium oxide, tin oxide, holminium oxide or calcium oxide, a metal hydroxide such as magnesium hydroxide or aluminum hydroxide, a silicate compound such as cordierite or mullite, a metal filling material such as gold, silver, copper, platinum, iron, tin, lead, nickel, aluminum, magnesium, tungsten, molybdenum or stainless steel. Preferably, boron nitride and silicon oxide, which have a low dielectric constant, are preferable, and hexagonal boron nitride (h-BN) is particularly preferable since the dielectric constant is low and the thermal conductivity is high.

The thermal conductivity or the like becomes higher as the content of the inorganic filler increases, and, ordinarily, inorganic fillers have large relative permittivity and a small dielectric dissipation factor compared with resin components, and thus an increase in the filler content increases the dielectric constant. Therefore, it is preferable to fill the composition with a necessary amount of the filler content to an extent that the dielectric constant does not exceed an intended dielectric constant.

Examples of the shape of the filling material include a spherical shape, an amorphous shape, a fibrous shape, a rod shape, a tubular shape, a plate shape and the like. The shape of the filling material is preferably a shape by which orientation is not hindered when the polymerizable liquid crystal compound has developed a liquid crystal phase. The kind, shape, size, added amount and the like of the filling material can be selected as appropriate depending on the purpose. In a case where a low dielectric constant compact to be obtained requires insulating properties, a conductive filling material may also be added as long as desired insulating properties, dielectric constant and dielectric loss are maintained. Preferably, when boron nitride having plate-like crystals is used, or the liquid crystal compound is likely to be oriented vertically with respect to the plate-like structure or the liquid crystal compound is likely to be oriented along the plate-like structure, which is preferable. Whether the liquid crystal compound is oriented vertically with respect or along the flat plate depends on the affinity between the polymerizable liquid crystal compound and the filler. The use of the polymerizable liquid crystal compound and spherical silicon oxide having fine particle diameters makes it possible to increase the viscosity of melts or solutions, and the use of a silicate compound makes it possible to decrease the coefficients of thermal expansion of compacts, which are preferable.

The average particle diameter of the spherical or amorphous filling material is preferably 0.1 to 200 µm. The average particle diameter is more preferably 1 to 100 µm. When the average particle diameter is 0.1 µm or more, the thermal conductivity is favorable, and, when the average particle diameter is 200 µm or less, it is possible to increase the filling rate. Regarding fibrous filling agents, as the fiber lengths become longer, the tensile strengths further improve, but kneading or dispersion becomes impossible, and thus it is preferable to select the fiber lengths depending on uses. In the case of dispersing the filling agent, the average particle diameter of the fibrous filling material is preferably 0.01 to 200 µm. The average particle diameter is more preferably 0.1 to 100 µm. When the average particle diameter is 0.1 µm or more, the thermal conductivity is favorable, and, when the average particle diameter is 200 µm or less, it is possible to increase the mechanical strength.

The average particle diameter in the present specification is based on the measurement of particle size distribution by a laser diffraction/scattering method. That is, when a powder is divided into two parts based on a certain particle diameter by a wet-type method using an analysis by the Fraunhofer diffraction theory and the Mie scattering theory, a diameter at which the (volume-based) amounts of the large part and the small part become equal is regarded as the median diameter.

The amount of the filling material is preferably set so that the cured low dielectric constant compact contains 20 to 95 weight% of the filling material. The amount is more preferably 50 to 95 weight%. When the amount is 20 weight% or more, the thermal conductivity becomes high, which is preferable. When the amount is 95 weight% or less, the low dielectric constant compact does not become brittle, which is preferable.

As the filling material, a commercially available product that has been subjected to a surface treatment such as a dispersion treatment or a waterproof treatment may be used as it is or the commercially available product from which a surface treatment agent has been removed may be used. In addition, a non-treated filling agent may be used after being treated with a silane coupling agent, an affinity agent, a surface tension modifier, an anti-settling agent, an anti-agglomeration agent or the like.

### <Solvent>

The composition (1) may contain a solvent. The composition (1) may be polymerized in a solvent or in the absence of a solvent. The composition (1) containing a solvent may be applied onto a substrate by, for example, a spin coating method or the like and then photopolymerized after removing the solvent. In addition, the composition may be heated to an appropriate temperature after photocuring, and a post treatment may be performed thereon by thermal curing.

Examples of preferable solvents include benzene, toluene, xylene, mesitylene, hexane, heptane, octane, nonane, decane, tetrahydrofuran, γ-butyrolactone, N-methylpyrrolidone, dimethylformamide, dimethylsulfoxide, cyclohexane, methylcyclohexane, cyclopentanone, cyclohexanone, PGMEA and the like. The above-described solvents may be used singly or two or more solvents may be mixed and used.

There is no point in limiting the proportion of the solvent used during polymerization, and the solvent may be determined in each case in consideration of polymerization efficiency, solvent cost, energy cost and the like.

### <Other Additives>

The compound (1) and the composition (1) are highly polymerizable, and thus a stabilizer may be added thereto to facilitate handling. As such a stabilizer, well-known stabilizers can be used with no limitations, and examples thereof include hydroquinone, 4-ethoxyphenol, 3,5-di-t-butyl-4-hydroxytoluene (BHT) and the like.

In uses where a low dielectric dissipation factor (low tan δ) and a high glass transition temperature are required, a crosslinking agent is preferably added. A crosslinking agent that chemically bonds to the polymerizable group of the liquid crystal compound having a polymerizable group at an end of the present invention and forms a three-dimensional cross-link is preferable.

### [Low Dielectric Constant Resin]

A low dielectric constant resin that is another embodiment of the present invention is a cured product for forming the above-described low dielectric constant resin, is used for parts (an insulation part of a connector) and the like having a sheet shape, a film shape, a plate shape, a fibrous shape or a three-dimensional shape and can also be used as it is as a coating agent, an adhesive or a filling agent. The low dielectric constant resin is a cured product of the above-described composition and thus has a low dielectric constant and is also excellent in terms of thermal conductivity, heat resistance, stiffness, elasticity, molding fluidity, chemical resistance, dimension stability and the like since the polymerizable liquid crystal compound is used as a polymer.

In a case where the low dielectric constant resin exhibits liquid crystallinity, it is possible to control molecular orientation by an orientation treatment before curing. Relative permittivity and thermal conductivity develop anisotropy depending on the orientation direction of molecules. For example, at the time of the dielectric constant design or thermal design of an electronic substrate, when the electronic substrate is designed so that the thermal conductivity is high in the thickness direction immediately below an IC from which heat is generated and molecules are orientated in the lateral direction to spread heat across a wide range in portions that are not immediately below the IC, a more advanced material design becomes possible. The orientation method can be controlled by the following method.

Examples of a method for controlling the orientation in a mesogen part of liquid crystal molecules in the composition for forming a low dielectric constant resin include a method in which the filler surface is treated with a silane coupling agent, an orientation agent or the like having an orientation capability, a method in which molecules are orientated by the self polar anchoring energy of the composition itself and the like. These methods may be performed singly or two or more methods may be performed in combination. Examples of the orientation state that is controlled by such an orientation control method include homogeneous, twisted, homeotropic, hybrid, bend, splay and other orientations, and the orientation state can be determined as appropriate depending on the use or the orientation control method. In addition, during film formation or molding, it is also possible to physically orient molecules by applying shearing stress in a liquid crystal state before curing.

The orientation temperature is room temperature to 250°C, preferably room temperature to 200°C and more preferably within a range of room temperature to 180°C. The thermal treatment time is five seconds to two hours, preferably 10 seconds to 60 minutes and more preferably within a range of 20 seconds to 30 minutes. When the thermal treatment time is shorter than the above-described range, there are cases where it is not possible to increase the temperature of a layer made of the composition (l) up to a predetermined temperature, and, when the thermal treatment time is longer than the above-described range, there are cases where productivity deteriorates. The above-described thermal treatment conditions change depending on the kinds and composition ratio of compounds that are used in the composition (1), the presence or absence and content of the polymerization initiator or the like and thus simply show approximate ranges. Particularly, when the temperature of the low dielectric constant resin becomes higher than the polymerization initiation temperature, the low dielectric constant resin cures before orientation, which makes it impossible to obtain a low dielectric constant resin where molecular chains are oriented in a constant direction.

Examples of the polymerization method of the composition (1) include radical polymerization, anionic polymerization, cationic polymerization, coordination polymerization and the like, and, in order to fix molecular arrangement or fix a spiral structure, thermal polymerization or photopolymerization using light rays such as electron beams, ultraviolet rays, visible light rays or infrared rays (heat rays) or heat is suitable. Thermal polymerization is preferably performed in the presence of a polymerization initiator, and photopolymerization is preferably performed in the presence of a photoradical polymerization initiator. For example, polymers in which the arrangement of liquid crystal molecules has been fixed can be obtained by a polymerization method in which the composition is irradiated with ultraviolet rays, electron beams or the like in the presence of a photoradical polymerization initiator. The polymer (1) to be obtained may be any of a homopolymer, a random copolymer, an alternating copolymer, a block copolymer and a graft copolymer and may be selected as appropriate depending on uses or the like.

At the time of fixing the orientation of the composition (1) by photopolymerization, normally, ultraviolet rays or visible light rays are used. The wavelength of light that is used for light irradiation is 150 to 500 nm, preferably 250 to 450 nm and more preferably within a range of 300 to 400 nm. Examples of a light source for light irradiation include low-pressure mercury lamps (a germicidal lamp, a fluorescent chemical lamp and a black light), high-pressure discharge lamps (a high-pressure mercury lamp and a metal halide lamp), short-arc discharge lamps (an ultrahigh-pressure mercury lamp, a xenon lamp and a mercury-xenon lamp), ultraviolet light-emitting diodes and the like. Among these, a metal halide lamp, a xenon lamp, an ultraviolet light-emitting diode and a high-pressure mercury lamp are preferable.

The wavelength region of the irradiation light source may be selected by installing a filter or the like between the light source and the composition (1) and transmitting only a specific wavelength region. The amount of light that is radiated from the light source is 2 to 5000 mJ/cm², preferably 10 to 3000 mJ/cm² and more preferably within a range of 100 to 2000 mJ/cm². The temperature condition during light irradiation is preferably set to be the same as the above-described thermal treatment temperature.

Regarding conditions for fixing the orientation of the composition (1) by thermal polymerization, the thermal curing temperature is room temperature to 350°C, preferably room temperature to 250°C and more preferably within a range of 50°C to 200°C, and the curing time is five seconds to 10 hours, preferably one minute to five hours and more preferably within a range of five minutes to one hour. After polymerization, the composition is preferably slowly cooled in order to suppress stress strain or the like. In addition, a reheating treatment may be performed to relax strain or the like.

The orientation may be further controlled in an arbitrary direction by performing a mechanical operation such as stretching on a polymer having orientation controlled as described above or a polymer in a polymerization process.

The isolated polymer (1) may be dissolved in a solvent, oriented on an orientation treatment substrate and processed into a film or the like, two polymers may be mixed and processed or a plurality of polymers may be laminated. As the solvent, for example, N-methyl-2-pyrrolidone, dimethylsulfoxide, N,N-dimethylacetamide, N,N-dimethylformamide, N,N-dimethylacetamide dimethylacetal, tetrahydrofuran, chloroform, 1,4-dioxane, bis(methoxyethyl) ether, γ-butyrolactone, tetramethylurea, trifluoroacetic acid, ethyl trifluoroacetate, hexafluoro-2-propanol, 2-methoxyethyl acetate, methyl ethyl ketone, cyclopentanone, cyclohexanone and the like are preferable. These may be used after being mixed with an ordinary organic solvent such as acetone, benzene, toluene, heptane or methylene chloride.

Even in a case where the composition for forming a low dielectric constant resin having high linearity does not exhibit liquid crystallinity or a range where a liquid crystal phase is exhibited is extremely narrow, when the crystallinity is high, domains having axes aligned in a constant direction are formed, and thus the thermal conductivity becomes high compared with those of polymerizable compounds with a bisphenyl A structure or the like. In addition, orientation or crystallinity can also be controlled by slowly curing the composition from a state of an isotropic phase liquid in a state where the surface of a polymer sheet in which orientation directions are aligned or a crystalline resin filler or the like is made to be present as a core for crystal growth. However, when the crystallinity is made to be too high, there is a tendency for the flexibility to be low, and thus it is necessary to use a polymerizable composition having appropriate crystallinity.

A low dielectric constant compact of the present invention is made of the composition (1) and used in a shape of a sheet, a film, a thin film, a fiber, a compact or the like. A preferable shape is a film and a thin film. The film and the thin film can be obtained by polymerizing the composition (1) in a state of being applied to a substrate or a mold release film or a state of being sandwiched by flat plates such as substrates or dies. In addition, the low dielectric constant compact can also be obtained by applying the composition (1) containing a solvent to an orientation-treated substrate and removing the solvent. Furthermore, the film can also be obtained by pressing the polymer. The film thickness of a sheet in the present specification is 1 mm or more, the film thickness of a film is 5 µm or more, preferably 10 to 500 µm and more preferably 20 to 300 µm, and the film thickness of the thin film is less than 5 µm.

Hereinafter, a method for producing a film as a low dielectric constant compact using the composition (1) containing a solvent will be specifically described.

First, the composition (1) is applied onto a mold release-treated substrate, and the solvent is dried and removed, thereby forming a coated film layer having a uniform film thickness. Examples of an application method include spin coating, roll coating, curtain coating, flow coating, printing, micro gravure coating, gravure coating, wire bar coating, dip coating, spray coating, a meniscus coating method and the like.

The solvent can be dried and removed by performing, for example, air drying at room temperature, drying on a hot plate, drying in a drying furnace, blowing of warm air or hot air or the like. The conditions for solvent removal are not particularly limited, but the solvent needs to be dried until the solvent is mostly removed and the fluidity of the coated film layer disappears. Depending on the kinds and composition ratio of compounds that are used in the composition (1), there are cases where the molecular orientation of liquid crystal molecules in the coated film layer has been completed in a process for drying the coated film layer. In such a case, the coated film layer that has undergone the drying step can be subjected to a polymerization step without undergoing the above-described thermal treatment step. However, in order to make the orientation of the liquid crystal molecules in the coated film layer more uniform, it is preferable to heat the coated film layer that has undergone the drying step up to a liquid crystal phase development temperature to be oriented in a liquid crystal state and then perform a photopolymerization or thermal polymerization treatment to fix the orientation.

In addition, in a case where the composition (1) is used as a low dielectric constant insulation coat, it is also preferable to perform an orientation treatment on the surface of the substrate before the application of the composition (1). Examples of an orientation treatment method include a method in which only an orientation film is formed on a substrate or an orientation film is formed on a substrate and then a rubbing treatment is performed with a rayon cloth or the like, a method in which a rubbing treatment is directly performed on a substrate with a rayon cloth or the like, furthermore, a method in which an oblique vapor deposition of silicon oxide is performed and a method of rubbing-free orientation using a stretched film, a photo-orientation film, ion beams or the like. In addition, there are cases where a desired orientation state can be formed even without performing a treatment on the surface of the substrate. For example, in a case where homeotropic orientation is formed, there are many cases where a surface treatment such as a rubbing treatment is not performed, but a rubbing treatment may be performed from the viewpoint of achieving higher orientation properties.

The above-described orientation film is not particularly limited as long as the orientation of the composition (1) can be controlled, well-known orientation films can be used, and, for example, polyimide, polyamide, polyvinyl alcohol, alkylsilane, alkylamine or lecithin-based orientation films are suitable. In the case of vertically orienting the composition, a silane coupling agent is also suitable.

For the above-described rubbing treatment, an arbitrary method can be employed, and it is normal to employ a method in which a rubbing cloth made of a material such as rayon, cotton or a polyamide is wound around a metal roll or the like and the roll is moved while being rotated in a state of being in contact with the substrate or the orientation film, a method in which a roll is moved toward the substrate while being fixed or the like.

In addition, an orientation-controlling additive may be contained in the composition (l) in order to obtain more uniform orientation. Examples of such an orientation-controlling additive include imidazoline, quaternary ammonium salts, alkylamine oxides, polyamine derivatives, polyoxyethylene-polyoxypropylene condensates, polyethylene glycol and esters thereof, sodium lauryl sulfate, ammonium lauryl sulfate, amine lauryl sulfates, alkyl-substituted aromatic sulfonates, alkyl phosphates, aliphatic or aromatic sulfonic acid formalin condensates, laurylamidopropyl betaine, lauryl aminoacetic acid betaine, polyethylene glycol fatty acid esters, polyoxyethylene alkylamines, perfluoroalkyl sulfonates, perfluoroalkyl carboxylates, perfluoroalkylethylene oxide adducts, perfluoroalkyltrimethylammonium salts, oligomers having a perfluoroalkyl group and a hydrophilic group, oligomers having a perfluoroalkyl group and a lipophilic group, urethane having a perfluoroalkyl group, and organosilicon compounds having a primary amino group (for example, alkoxysilane-type, linear siloxane-type, and three-dimensional condensation-type silsesquioxane-type organosilicon compounds) and the like.

Examples of the substrate include plastic film substrates and glass-reinforced resin substrates of polyimide, polyamide-imide, polyamide, polyetherimide, polyether ether ketone, polyether ketone, polyketone sulfide, polyethersulfone, polysulfone, polyphenylene sulfide, polyphenylene oxide, polyethylene terephthalate, polybutylene terephthalate, polyethylene naphthalate, polyacetal, polycarbonate, polyarylate, an acrylic resin, polyvinyl alcohol, polypropylene, cellulose, triacetylcellulose or a partially saponified product thereof, an epoxy resin, a phenolic resin, a norbornene resin or the like, additionally, glass substrates of alkali glass, borosilicate glass, flint glass or the like; metal substrates of aluminum, iron, copper or the like; inorganic substrates of silicon; and the like.

The film substrate may be a uniaxially stretched film or may be a biaxially stretched film. On the film substrate, a surface treatment such as a saponification treatment, a corona treatment or a plasma treatment may be performed in advance. On these film substrates, a protective layer may be formed so as to prevent the entering of the solvent that is contained in the composition (1). Examples of a material that is used for the protective layer include polyvinyl alcohols. Furthermore, an undercoat layer may also be formed in order to enhance the adhesiveness between the protective layer and the substrate. Such an undercoat layer may be any of an inorganic material and an organic material as long as the adhesiveness between the protective layer and the substrate is enhanced.

The composition for forming a low dielectric constant resin of the present invention is useful for low dielectric substrates, low dielectric sheets, low dielectric coatings, low dielectric adhesives, low dielectric compacts and the like.

### <Production Method>

Hereinafter, a method for producing the composition for forming a low dielectric constant resin, a low dielectric constant highly heat- resistant substrate made of the composition, and a method for producing the low dielectric constant highly heat-resistant substrate will be specifically described.

The composition for forming a low dielectric constant resin of the present invention is used as it is as a liquid-form resin raw material in a temperature region where a liquid crystal phase or an isotropic phase is developed and can also be used after being dissolved in a solvent. A solution is prepared by adding a polymerizable liquid crystal composition, a necessary solvent, a filler and an additive and stirring and defoaming the components using a stirrer to an extent that composition unevenness disappears. For example, the components were stirred at a rotation speed of 2000 rpm for 10 minutes using a planetary centrifugal mixer and then defoamed at a rotation speed of 2200 rpm for 10 minutes. The components can be dispersed using, in addition to the planetary centrifugal mixer, a stirring motor, a mortar machine, a triple roll, ball mill, a planetary centrifugal mill, a planetary mill, a bead mill, a jet mill or the like.

As an application method, wet coating methods are preferably used in order to uniformly coat the low dielectric constant polymerizable composition. Among the wet coating methods, a spin coating method, which is simple and enables the production of a homogeneous film, is preferable in the case of producing a small amount of the solution. In a case where productivity is emphasized, a gravure coating method, a die coating method, a bar coating method, a reverse coating method, a roll coating method, a slit coating method, a dipping method, a spray coating method, a kiss coating method, a reverse kiss coating method, an air knife coating method, a curtain coating method, an inkjet method, a flexographic printing method, a screen printing method, a rod coating method or the like is preferable. The wet coating methods can be selected as appropriate depending on the film thickness, viscosity, curing conditions or the like required from these methods.

In the case of producing a sheet, it is possible to use a casting method in which a mold release-treated base material is coated with the composition by the above-described method or the like and released from a mold, and, in the case of producing a structure, it is possible to use a die and a resin molding method such as a press forming method, an injection method and a variety of 3D printer molding methods (an ejection lamination method). The composition can be primarily cured after being molded and removed from the die or can be primarily cured in the die.

### [Examples]

The present invention will be more specifically described with examples (including fabrication examples of compounds, compositions, polymers, resins and the like). The present invention is not limited by these examples.

### [Synthesis Example of Compound (1)]

A compound (1) was synthesized by a procedure described in the examples such as Synthesis Example 1. Unless particularly otherwise described, reactions were performed in a nitrogen atmosphere. Synthesized compounds were identified by a method such as NMR analysis. Element characteristics of the compound (1), compositions, polymers, resins and the like were measured by the following methods.

### <NMR Analysis>

JNM-ECZR manufactured by JEOL Ltd. was used in measurement. In ¹H-NMR measurement, a specimen was dissolved in a deuterated solvent such as CDCl₃, and measurement was performed under conditions of room temperature, 500 MHz and a cumulative number of 16 times. Tetramethylsilane was used as an internal standard. In ¹⁹F-NMR measurement, CFCl₃ was used as an internal standard, and the cumulative number was 32 times. In the description of a nuclear magnetic resonance spectrum, s means singlet, d means doublet, t means triplet, q means quartet, quin means quintet, sex means sextet, m means multiplet and br means broad.

### <Gas Chromatography Analysis>

GC-2014 type gas chromatograph manufactured by Shimadzu Corporation was used in measurement. As a column, a capillary column DB-1 (length: 30 m or 15 m, inner diameter: 0.25 mm and film thickness: 0.25 µm) manufactured by Agilent Technologies Inc. was used. As a carrier gas, nitrogen (1 ml/minute) was used. The temperature of a specimen volatilization chamber was set to 300°C, and the temperature of a detector (FID) part was set to 300°C. The specimen was dissolved in an appropriate solvent such as acetone to prepare 1 weight% of a solution, and 1 µl of the obtained solution was injected into the specimen volatilization chamber. As a recorder, GC Solution system manufactured by Shimadzu Corporation was used.

### <HPLC Analysis>

Prominence (LC-20AD; SPD-20A) manufactured by Shimadzu Corporation was used in measurement. As a column, YMC-Pack ODS-A (length: 150 m, inner diameter: 4.6 mm and particle diameter: 5 µm) manufactured by YMC Co., Ltd. was used. As an eluate, acetonitrile and water were appropriately mixed and used. As a detector, a UV detector, an RI detector, a CORONA detector and the like were appropriately used. In the case of using a UV detector, the detection wavelength was set to 254 nm. The specimen was dissolved in acetonitrile to prepare 0.1 weight% of a solution, and 1 µL of this solution was introduced into a specimen chamber. As a recorder, C-R7Aplus manufactured by Shimadzu Corporation was used.

### <Ultraviolet-Visible Absorption Spectroscopy>

PharmaSpec UV-1700 manufactured by Shimadzu Corporation was used in measurement. The detection wavelength was set to 190 nm to 700 nm. The specimen was dissolved in acetonitrile to prepare 0.01 mmol/L of a solution, and the solution was put into a silica cell (optical path length: 1 cm) and measured.

### <Measurement Specimen>

At the time of measuring the phase structure and transition temperatures (the clearing point, the melting point, the polymerization initiation temperature and the like), compounds themselves were used as specimens.

### (1) Phase structure

The specimen was placed on a hot plate of a melting point-measuring instrument including a polarizing microscope (FP-52 type hot stage manufactured by Mettler Toledo). While this specimen was heated at a rate of 3 °C/minute, the phase state and a change thereof were observed with the polarizing microscope, and the kind of the phase was specified.

### (2) Transition temperatures (°C)

A high-sensitivity differential scanning calorimeter X-DSC7000 manufactured by Seiko Instruments Inc. was used in measurement. The specimen was heated and cooled at a rate of 3 to 5 °C/minute, the start point of an endothermic peak or an exothermic peak attributed to a phase change of the specimen is obtained by extrapolation, and transition temperatures were determined. The melting point and polymerization initiation temperature of the compound were also measured using this device. There will be cases where a temperature at which the compound transits from solid to a liquid crystal phase such as a smectic phase or a nematic phase is abbreviated as "the lower limit temperature of the liquid crystal phase". There will be cases where a temperature at which the compound transits from the liquid crystal phase to liquid is abbreviated as "the clearing point".

Crystals were indicated by C. In a case where the kinds of crystals were distinguished from each other, the kinds of crystals were each indicated by C₁, C₂ or the like. The smectic phase was indicated by S, and the nematic phase was indicated by N. In a case where a smectic A phase, a smectic B phase, a smectic C phase or a smectic F phase is distinguished from others in the smectic phase, the phases were each indicated by Sa, S_{B}, S_{C} or S_{F}. An (isotropic) liquid was indicated by I. Transition temperatures were indicated by, for example, "C 50.0 N 100.0 I". This indicates that the transition temperature from crystal to the nematic phase is 50.0°C and the transition temperature from the nematic phase to liquid is 100.0°C.

### [Synthesis Example 1]

Synthesis of a compound (S01: a compound (1-1-1a) where R^{b}'s were both CH₃, n = 0, m = 0, and M and Z² were single bonds)

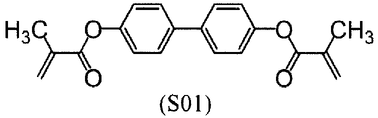

4,4'-Biphenyldiol (S01-a) is commercially available from, for example, Fujifilm Wako Pure Chemical Corporation and the like.

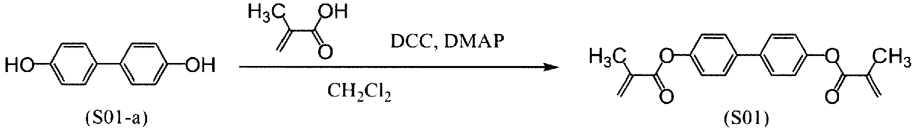

A dichloromethane (100 mL) solution of 4,4'-biphenyldiol (S01-a) (10.0 g, 53.70 mmol), N,N'-dicyclohexylcarbodiimide (DCC) (24.4 g, 118.2 mmol) and 4-dimethylaminopyridine (DMAP) (3.94 g, 32.22 mmol) was cooled to -10°C and stirred in a nitrogen atmosphere. Methacrylic acid (9.71 g, 112.8 mmol) was added dropwise to the obtained solution, the temperature was slowly raised up to ordinary temperature, and the solution was stirred for six hours. A reaction liquid was filtered by adding dichloromethane (100 mL) thereto and washed with water three times, and then an organic layer was vacuum-concentrated at 40°C. A product was isolated from the obtained residue by silica gel chromatography (solvent: toluene/ethyl acetate = 5/1 (volume ratio)) and vacuum-concentrated at 40°C. After that, the product was purified by recrystallization filtration (heptane/ethyl acetate = 3/3v) and further dried at reduced pressure, thereby obtaining a compound (S01) (11.8 g, 36.52 mmol). The transition point of this compound (S01) was C 150.9 I (°C). In addition, the polymerization initiation temperature was 171.9°C.

In addition, the ¹H-NMR signal of the compound was as described below.
δ (ppm; CDCl₃): 7.58 - 7.56 (d, 4H), 7.19 - 7.18 (d, 4H), 6.37 (qd, 2H), 6.21 (qd, 2H), 2.07 (dd, 6H)

### [Synthesis Example 2]

Synthesis of a compound (S02: a compound (1-1-3a) where R^{b}'s were both CH₃, n = 0, m = 0, and M and Z² were single bonds)

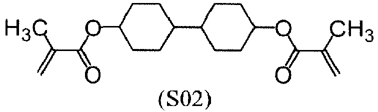

4,4'-Bicyclohexyldiol (S02-a) is commercially available from, for example, Fujifilm Wako Pure Chemical Corporation and the like. This raw material was purified using a method such as ordinary recrystallization filtration, and a trans form was isolated.

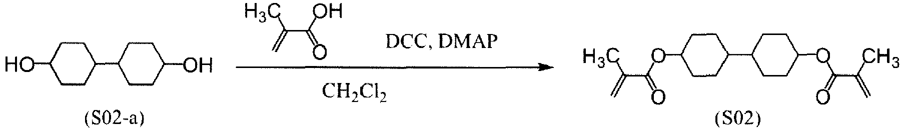

A compound (S02) (3.60 g, 10.76 mmol) was obtained by the same method as described in Synthesis Example 1 of Example 1 except that 4,4'-bicyclohexyldiol (S02-a) was used instead of 4,4'-biphenyldiol (S01-a). The transition point of this compound (S01) was C 113.0 I (°C). In addition, the polymerization initiation temperature was 118.8°C.

In addition, the ¹H-NMR signal of the compound was as described below.
δ (ppm; CDCl₃): 6.06 (qd, 2H), 5.52 - 5.51 (qd, 2H), 4.71 - 4.65 (tt, 2H), 2.05 - 2.00 (m, 4H), 1.92 - 1.91 (dd, 6H), 1.80 - 1.77 (m, 4H), 1.38 - 1.36 (m, 4H), 1.15 - 1.08 (m, 6H)

### [Synthesis Example 3]

Synthesis of a compound (S03: a compound (1-1-1a) where R^{b}'s were both CH₃, n = 0, m = 6, M was oxygen and Z² was a single bond)

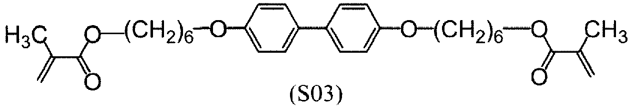

4,4'-Biphenyldiol (S03-a) is commercially available from, for example, Fujifilm Wako Pure Chemical Corporation and the like.

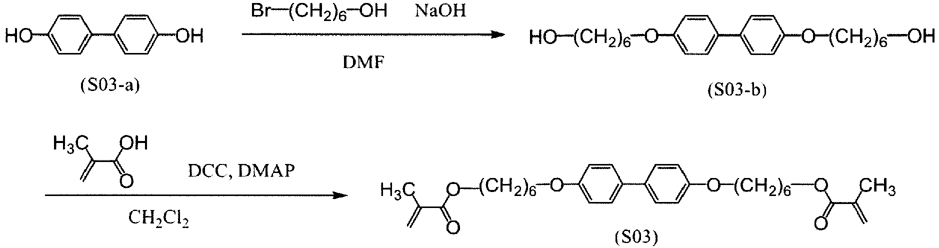

### (First Stage)

A N,N-dimethylformamide (100 mL) solution of 4,4'-biphenyldiol (S01-a) (10.0 g, 53.70 mmol), sodium hydroxide (4.51 g, 112.8 mmol) and 6-bromo-1-hexanol (20.4 g, 112.8 mmol) was heated and stirred at 60°C for six hours in a nitrogen atmosphere. A reaction liquid was filtered as it was, and crystals were washed with ethanol three times and then dried at reduced pressure, thereby obtaining a compound (S03-b) (14.0 g, 36.22 mmol).

### (Second Stage)

A compound (S03) (2.90 g, 5.55 mmol) was obtained by the same method as described in Synthesis Example 1 of Example 1 except that the compound (S03-b) obtained in the previous stage and 4,4'-bicyclohexyldiol (S02-a) were used instead of 4,4'-biphenyldiol (S01-a). The transition point of this compound (S03) was C 61.9 I (°C). In addition, the polymerization initiation temperature was 163.3°C.

In addition, the ¹H-NMR signal of the compound was as described below.
δ (ppm; CDCl₃): 7.45 - 7.43 (d, 4H), 6.94 - 6.91 (d, 4H), 6.09 (qd, 2H), 5.54 - 5.53 (qd, 2H), 4.17 - 4.14 (t, 4H), 3.99 - 3.97 (t. 4H), 1.93 (dd, 6H), 1.84 - 1.78 (tt, 4H), 1.74 - 1.68 (tt, 4H), 1.55 - 1.42 (m. 8H)

### [Synthesis Example 4]

Synthesis of a compound (S04: a compound (1-1-3a) where R^{b}'s were both CH₃, n = 0, m = 6, M was a single bond and Z² was a single bond)

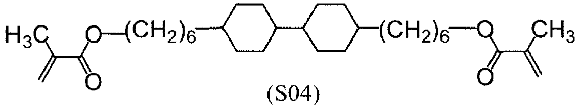

As 4,4'-bicyclohexyldiol (S02-a), the same one as in Synthesis Example 2 was used.

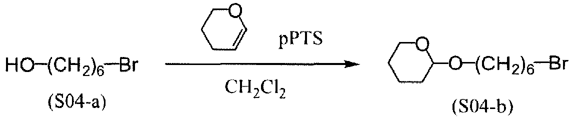

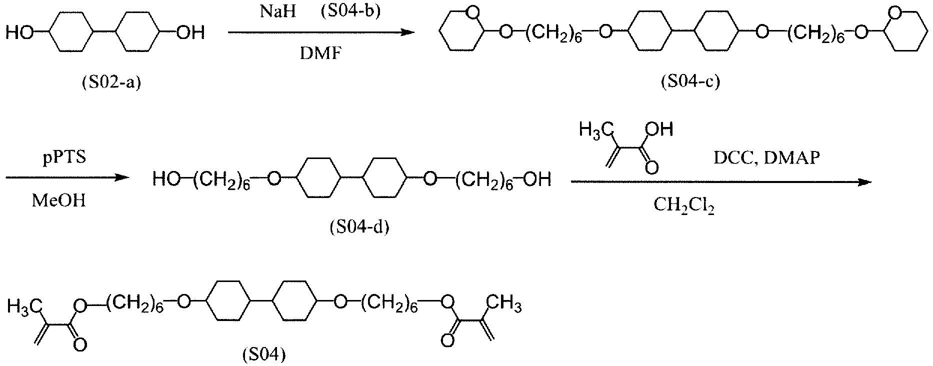

### (First Stage)

2,3-Dihydro-2H-pyran (27.9 g, 331.3 mmol) was added to 6-bromo-1-hexanol (50.0 g, 276.1 mmol) and a dichloromethane (500 mL) solution of pyridium-p-toluenesulfonate (6.94 g, 27.7 mmol) in a nitrogen atmosphere and stirred for two hours at the as-is temperature. A reaction liquid was emptied into water, an organic layer was washed with water three times, and the obtained organic layer was vacuum-concentrated, thereby obtaining a compound (S04-b) (68.5 g, 258.3 mmol).

### (Second Stage)

4,4'-Dicyclohexanol (S02-a) (7.12 g, 35.9 mmol) was added to a N,N-dimethylformamide (100 mL) solution of sodium hydroxide (55%) (3.29 g, 75.5 mmol) at 10°C in a nitrogen atmosphere. This solution was stirred at 40°C for 30 minutes, then, the compound (S04-b) obtained in the previous stage (20.0 g, 75.5 mmol) was added thereto, heated and stirred at 60°C for 18 hours. A reaction liquid was slowly added to water and extracted with toluene (300 mL), an organic layer was washed with water three times, and the obtained organic layer was vacuum-concentrated. An obtained residue was purified by silica gel chromatography (solvent: toluene/ethyl acetate = 2/1 (volume ratio)), and a compound (S04-c) (11.4 g, 20.1 mmol) was obtained.

### (Third Stage)

The compound (S04-c) obtained in the previous stage (11.4 g, 20.1 mmol) and a methanol (200 mL)/THF (200 mL) solution of pyridinium-p-toluenesulfonate (6.94 g, 27.7 mmol) were stirred in a nitrogen atmosphere at the as-is temperature for two hours. A reaction liquid was emptied into water and extracted with ethyl acetate (500 mL), an organic layer was washed with water three times, and the obtained organic layer was vacuum-concentrated, thereby obtaining a compound (S04-d) with white crystals (8.00 g, 20.0 mmol).

### (Fourth Stage)

A compound (S04) (7.78 g, 14.5 mmol) was obtained by the same method as described in Synthesis Example 1 of Example 1 except that the compound (S04-d) was used instead of 4,4'-biphenyldiol (S01-a). The transition point of this compound (S01) was C 40.6 I (°C). In addition, the polymerization initiation temperature was 173.8°C.

In addition, the ¹H-NMR signal of the compound was as described below.
δ (ppm; CDCl₃): 6.02 (qd, 2H), 5.53 - 5.52 (qd, 2H), 4.13 - 4.10 (t, 4H), 3.43 (t, 4H), 3.11 - 3.06 (tt, 2H), 2.05 - 1.99 (m, 4H), 1.93 - 1.92 (dd, 6H), 1.76 - 1.71 (m, 4H), 1.69 - 1.63 (m, 4H), 1.57 - 1.51 (m, 4H), 1.39 - 1.32 (m, 8H), 1.19 - 1.09 (m, 4H), 1.06 - 0.91 (m, 6H)

### [Synthesis Example 5]

Synthesis of compound (S07: a compound (1-1-3) where R^{1a} and R^{1b} were a formula (PG-5), R^{b} was hydrogen, q = 0 and Z¹, Z² and Z⁴ were all -OCH₂-)

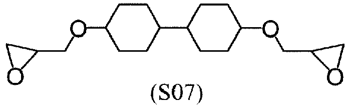

As 4,4'-dicyclohexanol (S02-a), the same one as in Synthesis Example 1 was used.

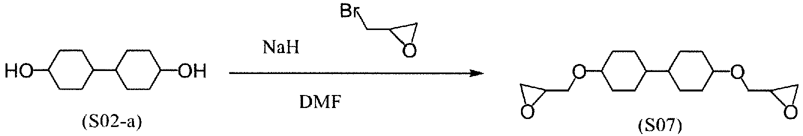

4,4'-Dicyclohexanol (S02-a) (5.00 g, 25.3 mmol) was added to a N,N-dimethylformamide (60 mL) solution of sodium hydroxide (55%) (2.42 g, 55.56 mmol) at 10°C in a nitrogen atmosphere. This solution was stirred at 40°C for 30 minutes, and then epibromohydrin (10.4 g, 75.8 mmol) was added thereto, heated and stirred at 40°C for three days. A reaction liquid was slowly added to water and extracted with toluene (200 mL), an organic layer was washed with water three times, and the obtained organic layer was vacuum-concentrated. An obtained residue was purified by silica gel chromatography (solvent: toluene/ethyl acetate = 4/1 (volume ratio)), and a compound (S07) (5.10 g, 16.5 mmol) was obtained. The transition point of this compound (S07) was C 38.3 I (°C). In addition, the polymerization initiation temperature was 137.1°C.

In addition, the ¹H-NMR signal of the compound was as described below.
δ (ppm; CDCl₃): 3.71 - 3.68 (dd, 2H), 3.46 - 3.42 (dd, 2H), 3.24 - 3.17 (tt, 2H), 3.14 - 3.10 (m, 2H), 2.79 - 2.78 (dd, 2H), 2.60 - 2.59 (dd, 2H), 2.08 - 2.01 (m, 4H), 1.77 - 1.71 (m, 4H), 1.23 - 1.12 (m, 4H), 1.05 - 0.92 (m, 6H)

### [Evaluation of Physical Properties]

### [Example 1]

### <Production of Sample for Relative Permittivity Measurement>

For the synthesized polymerizable compound (S01), a 0.5 mm-thick PTFE sheet having a 1.5 mm × 60 mm through slit opened at the center of an A4 size was laminated on a 1 mm-thick PTFE sheet having, similarly, an A4 size, the polymerizable compound as much as 20% larger than the amount of the polymerizable compound necessary to fill the through hole was put into the slit, and, furthermore, a 1 mm-thick PTFE sheet having an A4 size was laminated with careful attention to prevent the polymerizable compound from scattering due to static electricity. These laminated sheets were sandwiched by 5 mm-thick aluminum plates, set in a mini test press manufactured by Toyo Seiki Seisaku-sho, Ltd. set to 190°C, pressurized up to 3 MPa while being defoamed, heated up to 210°C and then cured for 30 minutes. The pressure during pressing was set to 3 MPa so as to prevent the collapse of a PTFE die.

A 0.5 mm × 1.5 mm × 60 mm strip-like sample after curing was evaluated as a low dielectric constant resin.

### <Evaluation Method of Relative Permittivity and Thermal Conductivity>

The shift amount and attenuation of the resonant frequency of the cured strip were measured using a cavity resonator (CP 431 for 1 GHz, CP531 for 10 GHz) manufactured by Kanto Electronic Application and Development Inc. connected to a network analyzer (E8361A type manufactured by Agilent Technologies International Japan, Ltd. (currently, Keysight Technologies)), and the relative permittivity was calculated using software manufactured by the same company. In order to reduce the influence of the amount of moisture in the strip during the comparison of data, the fairing of the strip was performed one day before measurement, and the evaluation of the relative permittivity was begun after the sample was placed still in a laboratory at a temperature of 20°C and a humidity of 48% for 60 minutes or longer.

In addition, the strip-like sample after the measurement of the relative permittivity was cut into an approximately 1.5 mm × 1.5 mm piece, the thermal diffusivity in the thickness direction was measured with a mobile 1 type thermal diffusivity-measuring instrument manufactured by ai-Phase Co., Ltd., and the specific heat was measured with a high-sensitivity differential scanning calorimeter Thermo Plus EVO2 DSC-8231 (DSC) manufactured by Rigaku Corporation. Since the sample size was small, and thus the density could not be measured, the thermal conductivity was simply evaluated by assuming the density to be 1.1. Since the sample was molded by hot press, molecular chains were oriented in the plane direction, and the thermal conductivity in a direction where the thermal conductivity was poor was measured (the summary of the 37th Japan Symposium on Thermophysical Properties, C223, the Influence of a synergistic effect by a surface treatment on the thermal conductivity of a liquid crystalline epoxy resin composite material, 2016).

### [Example 2]

A sample was fabricated in the same manner as in Example 1 except that the polymerizable compound was changed to the polymerizable compound (S02) and the temperature during pressing was changed to 150°C, and the relative permittivity and the thermal conductivity were measured.

### [Example 3]

A sample was fabricated in the same manner as in Example 2 except that the polymerizable compound was changed to the polymerizable compound (S05) and the curing temperature was set to 200°C, and the relative permittivity and the thermal conductivity were measured. To S05, 5 weight% of a V-601 oil-soluble azo polymerization initiator manufactured by FUJIFILM Wako Pure Chemical Corporation was added as an initiator. 0.05 g of a curing agent was added to 1.00 g of (S05).

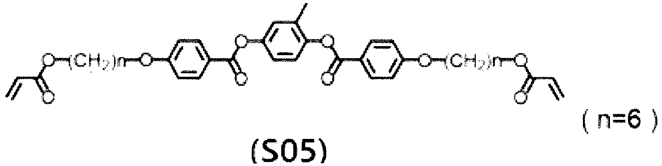

The compound (S05) was synthesized by a method described in Japanese Patent No. 5084148.

### [Example 4]

A sample was fabricated in the same manner as in Example 2 except that the polymerizable compound was changed to the polymerizable compound (S06) and the curing temperature was set to 180°C, and the relative permittivity was measured. To (S06), 4,4'-diamino-1,2-diphenylethane (manufactured by Wako Pure Chemical Industries, Ltd.) was added as a curing agent in a quantity calculated from the epoxy equivalent. 0.20 g of the curing agent was added to 0.68 g of (S06).

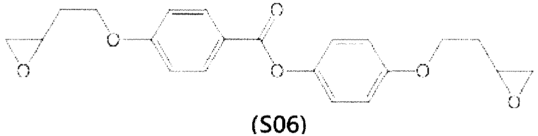

The compound (S06) was synthesized by a method described in Japanese Patent No. 5084148.

### [Example 5]

A sample was fabricated in the same manner as in Example 2 except that the polymerizable compound was changed to the polymerizable compound (S03), and the relative permittivity and the thermal conductivity were measured.

### [Comparative Example 1]

KAPTON 500 H (thickness: 125 µm) manufactured by Du Pont-Toray Co., Ltd. was cut into 1.5 mm × 100 mm using a cutter knife, and the relative permittivity and the thermal conductivity were measured by the same method as in Example 1.

### [Comparative Example 2]

Two millimeters of a transparent acryl plate manufactured by Hikari Co., Ltd. was processed into 1 mm × 2 mm × 100 mm using a jigsaw and abrasive paper, and the relative permittivity and the thermal conductivity were measured by the same method as in Example 1.

The relative permittivity and the thermal conductivity measured in Examples 1 to 4 and Comparative Examples 1 and 2 are summarized in Table 1.

**[Table 1]**

| | Relative permittivity | Thermal conductivity (thickness direction) |
|---|---|---|
| Example 1 | 2.61 | 0.25 W/m·K |
| Example 2 | 2.07 | 0.32 W/m·K |
| Example 3 | 2.93 | 0.22 W/m·K |
| Example 4 | 2.67 | 0.24 W/m·K |
| Example 5 | 2.01 | 0.27 W/m·K |
| Comparative Example 1 | 3.22 | 0.11 W/m·K |
| Comparative Example 2 | 3.06 | 0.13 W/m·K |

As a result of relative permittivity measurement, it was found that, while the relative permittivity at 10 GHz of the polyimide film, which is in a wide use, or the commercially available acrylic resin was 3.0 or more, the relative permittivity was smaller than 3.0 in Examples 1 to 4, and the low dielectric constant resins were compositions that can be used for high frequency circuit boards. Particularly, in Example 2, the relative permittivity was low, and relative permittivity equivalent to that of PTFE substrates is achieved.

When Example 1 and Example 2 are compared with each other, the relative permittivity of Example 2 was low. This is considered to be because there are no electron conjugates in the bicyclohexyl structure rather than in the biphenyl structure. In addition, in the comparison between Example 3 and Example 4, it was considered that the relative permittivity was low in Example 3, and, with three members rather than two members, the number of polymerizable groups was small and the dielectric constant was effectively decreased, but it is considered that, as the number of ester bonds connecting the benzene ring increases, the relative permittivity further increases.

Incidentally, in the measurement of the thermal conductivity, it is found from the comparison between Example 1 and Example 2 that the thermal conductivity is higher with the bicyclohexyl structure than with structures where biphenyl or a benzene ring was connected with an ester bond. This indicates that, while heat energy is transmitted by phonon conduction in materials other than metal, in (S02) of the present invention, a bicyclohexyl intermediate of a trans form (chair form) is used as in liquid crystal materials, and thus the linearity is high, and thus phonons are efficiently conducted. In addition, the difference in thermal conductivity between the biphenyl structure and a structure where a benzene ring is ester-bonded can be said to be not as large as the difference between bicyclohexyl and biphenyl while the thermal conductivity is slightly favorable with biphenyl. In the comparison between Example 2 and Example 5, it is found that, when an alkyl chain between the bicyclohexyl skeleton and the polymerizable groups becomes long, the thermal diffusivity slightly drops, but the relative permittivity becomes low. This is considered to be because the long alkyl decreases the number of the polymerizable groups that increase the dielectric constant and phonon conduction becomes slightly difficult due to the molecular chains becoming flexible. Actually, compared with the sheet after curing produced in Example 1 that was extremely brittle and easy to crack, a flexible sheet was obtained in Example 5.

### [Evaluation of Thermal Conductivity of Highly Heat-Dissipating Filler Composite Material]

### <Production of Sample for Thermal Conductivity Measurement>

### [Example 6]

In uses where heat dissipation properties are required, it is conceivable to use a composite of the polymerizable compound of the present invention and a highly heat-dissipating filler, and thus heat dissipation properties were evaluated by thermal conductivity measured after compositing the compound for forming a low dielectric constant resin and a boron nitride filler such that the volume ratio reached 50:50. 0.44 g of the polymerizable compound (S01) and 0.80 g of boron nitride (PolarTherm PTX-25 manufactured by Momentive Performance Materials Inc.) were mixed with an agate mortar, and a disc having 25 mmcp and a thickness of 0.5 mm (for the measurement of thermal diffusivity in the planar direction) and a 10 mm × 10 mm × 0.5 mm square (for the measurement of thermal diffusivity in the thickness direction) sample were fabricated by the same method as for the sample for dielectric constant measurement using hot press and a PTFE die. The pressure during pressing was set to 3 MPa so as to prevent the collapse of the PTFE die. Since the pressures at which normal electronic substrates are molded/cured are not as high as those for highly packed heat-dissipating resin parts, the samples were molded under the present conditions.

### <Thermal Conductivity Evaluation>

The specific heat (measured by the above-described DSC) measured by) and specific weight (measured with a specific electron balance type density meter DME-220 manufactured by Shinko Denshi Co. Ltd.) of the fabricated composite material were obtained in advance, and these values were multiplied by thermal diffusivity obtained with LFA 467 thermal diffusivity-measuring instrument manufactured by NETZSCH Japan K.K. and accessory software, thereby calculating thermal conductivity in the in-plane direction and in the thickness direction.

### [Example 7]

A sample was fabricated in the same manner as in Example 6 except that the polymerizable compound was changed to the polymerizable compound (S02), and the thermal conductivity was evaluated.

### [Example 8]

The polymerizable compound was changed to a polymerizable compound obtained by mixing 0.11 g of (S01) and 0.33 of (S02). First, (S02) was put into an aluminum cup, placed on a hot plate and dissolved by setting the set temperature of the hot template to 140°C, and (S01) was dissolved therein. Pure (S01) did not melt until the set temperature was set to 190°C or higher. A boron nitride powder was put into the melt of (S01) and (S02) and mixed with a dispensing spoon. The mixture was cooled and then pulverized with a mortar, a sample was fabricated in the same manner as in Example 6, and the thermal conductivity was evaluated.

### [Example 9]

A sample was fabricated in the same manner as in Example 6 except that the polymerizable compound was changed to the polymerizable compound (S06) and the curing temperature was set to 200°C, and the relative permittivity was measured. To (S06), 4,4'-diamino-1,2-diphenylethane (manufactured by Wako Pure Chemical Industries, Ltd.) was added as a curing agent in a quantity calculated from the epoxy equivalent. 0.20 g of the curing agent was added to 0.68 g of (S06).

### [Comparative Example 3]

A sample was fabricated in the same manner as in Example 5 except that the polymerizable compound was changed to jER807 manufactured by Mitsubishi Chemical Corporation and the curing agent was changed to 4,4'-diamino-1,2-diphenylethane (manufactured by Wako Pure Chemical Industries, Ltd.), and the thermal conductivity was measured.

The thermal conductivity measured in Examples 6 to 9 and Comparative Example 3 are summarized in Table 2.

**[Table 2]**

| | Thermal conductivity (planar direction) | Thermal conductivity (thickness direction) |
|---|---|---|
| Example 6 | 8.1 W/m·K | 8.2 W/m-K |
| Example 7 | 9.5 W/m·K | 12.2 W/m·K |
| Example 8 | 25.2 W/m·K | 8.3 W/m·K |
| Example 9 | 7.9 W/m·K | 6.5 W/m·K |
| Comparative Example 3 | 6.5 W/m·K | 6.2 W/m·K |

From the comparison between Example 6 and Example 7, it is found that, similar to the comparison between Example 1 and Example 2, when the polymerizable compound (S02) having a trans-form bicyclohexyl structure rather than a biphenyl structure (S01) is used, the thermal conductivity is high in the planar direction and in the thickness direction. In the present experiment, since the PTFE sheet was used as a die, unlike in a hard metal die having a male die and a female die combined, the pressure did not increase, and the aggregate-type boron nitride was also not crushed, and thus it is considered that the difference in thermal conductivity between the planar direction and the thickness direction was small while boron nitride was used. Compared with cases where the compound was molded under a condition where a highly packed heat-dissipating resin is cured to compensate for the low pressure (Example 9 and Patent Literature 4), the absolute value of the thermal conductivity became low.

On the other hand, the mixing of (S01) and (S02) increased the thermal conductivity in the planar direction. This is considered to be because the transition temperatures of (S02) were low and became easy to flow since (S01) having high transition temperatures was dissolved in S02 that had become a liquid phase or some molecules were polymerized upon melting and the degree of orientation of the elongated molecules became high.

In addition, when both (S01) and (S02) were cured in the absence of the filling material, the flexibility was low and the compounds were broken when the circular sample for thermal conductivity measurement had been shaven with a cutter knife; however, when an alkyl between the ring structure and the polymerizable groups is stretched, like (S03) or (S04), not only does the flexibility increase, but also the number of the benzene rings and the polymerizable groups, which are to have an increased dielectric constant, can also be decreased, and a low dielectric constant can also be expected.

As such, the use of the polycyclic polymerizable compound having high linearly of the present invention makes it possible to form electronic substrates or peripheral parts thereof having low relative permittivity and high thermal conductivity.

### [Example 10]

0.36 g of the polymerizable compound (S07) and 0.53 g of an active ester curing agent HPC-8000-65ST manufactured by DIC Corporation were mixed, and a solution containing 0.05 g of a curing accelerator TBP-3S manufactured by Hokko Chemical Industry Co., Ltd. dissolved in 1.1 g of toluene was further added thereto and stirred. This mixed solution was applied to a polyimide film (KAPTON 300 H manufactured by Du Pont-Toray Co., Ltd.) so that the thickness after drying reached approximately 40~ µm, the solvent was dried on a hot plate at 80°C for three minutes, and then the solute was put into an oven and cured in a nitrogen gas atmosphere at 150°C for one hour.

The sample formed on the polyimide film was cut out to 50 mm × 50 mm, and the shift amount and attenuation of the resonant frequency were measured using a cavity resonator (TE mode, for 10 GHz and for 28 GHz) manufactured by AET Inc. connected to a vector network analyzer (MS46522B-043 type manufactured by Anritsu Corporation), and the relative permittivity was calculated using software manufactured by the same company. In addition, since the measurement value was the measurement result of a bilayer structure of the polyimide film and the cured film, the dielectric constant of the cured film alone was obtained with a calculation sheet of the same company using a value obtained by measuring only the polyimide film. In order to reduce the influence of the amount of moisture in the strip during the comparison of data, a measuring instrument was installed in a room that was air-conditioned at all times, and the measurement began after the sample was placed still on a laboratory table 60 minutes or longer before the measurement.

### [Comparative Example 4]

A sample was fabricated in the same manner as in Example 9 except that the epoxy compound was changed to YX4000H having a biphenyl skeleton manufactured by Mitsubishi Chemical Corporation, and the relative permittivity was measured.

### [Comparative Example 5]

A sample was fabricated in the same manner as in Example 9 except that the epoxy compound was changed to jER807 having a bisphenol F skeleton manufactured by Mitsubishi Chemical Corporation, and the relative permittivity was measured.

The measurement results of the relative permittivity of Example 10 and Comparative example 4 are shown in Table 3.

**[Table 3]**

| | Relative permittivity at 10 GHz | Relative permittivity at 28 GHz |
|---|---|---|
| Example 10 | 2.05 | 2.34 |
| Comparative Example 4 | 2.65 | 2.53 |
| Comparative Example 5 | 2.57 | 2.55 |

From the comparison among Example 10, Comparative Example 4 and Comparative Example 5, it is found that the polymerizable compound of a cyclohexane ring of the present invention is epoxy, but has low relative permittivity and is capable of suppressing the relative permittivity at a low level even when being composited with a glass fiber and thus can be suitably used for low dielectric substrates.

### [Industrial Applicability]

The composition for forming a low dielectric constant resin having high linearity for a low dielectric member of the present invention has not only low dielectric properties but also high coatability, high heat dissipation properties, high transparency and excellent characteristics such as chemical stability, heat resistance, hardness and a mechanical strength and thus can be suitably used for low dielectric circuit boards, substrates for low dielectric antennas, low dielectric coated films, low dielectric adhesives and the like. In addition, since the dielectric constant is low at 10 GHz and 28 GHz, and high thermal diffusivity is exhibited, the composition can be suitably used particularly as electronic circuit boards or peripheral members thereof that are used in high frequency regions. Furthermore, since not only the above-described characteristics but also high heat dissipation properties are exhibited, the composition is also useful for highly heat-dissipating material uses.

## Claims

1. A composition for forming a low dielectric constant resin that is a composition containing a liquid crystal compound having a polymerizable group at an end, which is represented by a formula (1),
wherein relative permittivity at 10 GHz of a cured product of the composition is lower than 3.0,
R^{1a}-Z¹-A¹-Z² -A²-(Z³-A³)ₘ₁-Z⁴-R^{1b} (1)
in the formula (1),
A¹, A² and A³ are independently 1,4-cyclohexylene, 1,4-cyclohexenylene, 1,4-phenylene, bicyclo[2.2.2]oct-1,4-diyl, bicyclo[3.1.0]hex-3,6-diyl or fluorene-2,7-diyl, in these rings, at least one -CH₂- is optionally replaced by -O-, at least one -CH= is optionally replaced by -N=, at least one hydrogen is a halogen or an alkyl having 1 to 10 carbon atoms in which at least one hydrogen is optionally replaced by a halogen, in this alkyl, at least one -CH₂- is optionally replaced by -O-, -CO-, -COO-, -OCO- or -C=C-;
Z¹, Z², Z³ and Z⁴ are independently single bonds or alkylene having 1 to 20 carbon atoms, in this alkylene, at least one -CH₂- is optionally replaced by -O-, -S-, -CO-, -COO-, -OCO-, -SO₂-, -CH=CH-, -CF=CF-, -CH=N-, -N=CH- or -N=N-, at least one hydrogen is optionally replaced by a halogen;
m1 is 0, 1 or 2,
in a case where there is a plurality of Z³'s or A³'s in the formula, Z³'s or A³'s are optionally the same as or different from each other,
R^{1a} and R^{1b} are independently groups selected from polymerizable groups represented by formulae (PG-1) to (PG-5), 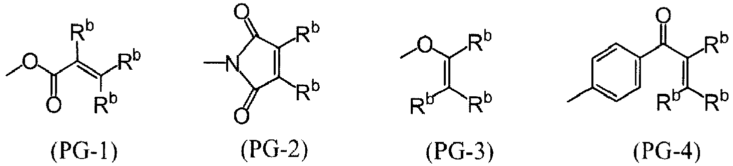 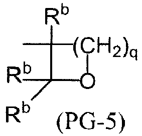
in the formulae (PG-1) to (PG-5), R^{b} is hydrogen, a halogen, -CF₃ or an alkyl having 1 to 5 carbon atoms, q is 0 or 1, in a case where there is a plurality of R^{b}'s in the formula, R^{b}'s are optionally the same as or different from each other:
in a case where A¹ and A² are 1,4-phenylene, Z² is a single bond, m is 0 and R^{1a} and R^{1b} are the polymerizable groups represented by the formula (PG-5), Z¹ and Z⁴ are alkylene having 3 to 20 carbon atoms, in these alkylene, at least one -CH₂- is optionally replaced by -O-, -S-, -CO-, -COO-, -OCO-, -SO₂-, -CH=CH-, -CF=CF-, -CH=N-, -N=CH- or -N=N-, and at least one hydrogen is optionally replaced by a halogen.

2. The composition for forming a low dielectric constant resin according to Claim 1,
wherein, in the formula (1), R^{1a} and R^{1b} are independently polymerizable groups represented by the formula (PG-1) or (PG-5).

3. The composition for forming a low dielectric constant resin according to Claim 1, containing a liquid crystal compound having a polymerizable group at an end, which is represented by any of formulae (1-1) to (1-3),
R^{1a}-Z¹-A¹-Z²-A²-Z⁴-R^{1b} (1-1)
R^{1a}-Z¹-A¹-Z²-A²-Z³-A³-Z⁴-R^{1b} (1-2)
R^{1a}-Z¹-A¹-Z²-A²-Z³-A³-Z³-A³-Z⁴-R^{1b} (1-3)
in the formulae (1-1) to (1-3),
A¹, A² and A³ are independently 1,4-cyclohexylene, 1,4-phenylene in which at least one hydrogen is optionally replaced by a halogen or alkylene having 1 to 10 carbon atoms, bicyclo[2.2.2]oct-1,4-diyl, bicyclo[3.1.0]hex-3,6-diyl or fluorene-2,7-diyl in which at least one hydrogen is optionally replaced by a halogen or alkylene having 1 to 10 carbon atoms,
Z¹, Z², Z³ and Z⁴ are independently single bonds, -(CH₂)ₐ-, -O(CH₂)ₐ-, -(CH₂)ₐO-, - O(CH₂)ₐO-, -COO-, -OCO-, -CH=CH-COO-, -OCO-CH=CH-, -(CH₂)ₐ-COO-, -OCO-(CH₂)ₐ-, - CH=CH-, -SO₂-, -OCF₂- or -CF₂O-; here, a is an integer of 1 to 20,
in a case where there is a plurality of Z³'s or A³'s in the formula, Z³'s or A³'s are optionally the same as or different from each other,
R^{1b} and R^{1b} are independently polymerizable groups represented by the formula (PG-1) or (PG-5), 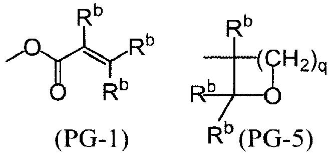
in the formulae (PG-1) and (PG-5), R^{b} is hydrogen, a halogen, -CF₃ or an alkyl having 1 to 5 carbon atoms, q is 0 or 1, and, in a case where there is a plurality of R^{b}'s in the formula, R^{b}'s are optionally the same as or different from each other.

4. The composition for forming a low dielectric constant resin according to Claim 1, containing a liquid crystal compound having a polymerizable group at an end, which is represented by any of formulae (1-1-1) to (1-1-3), 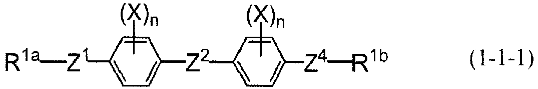 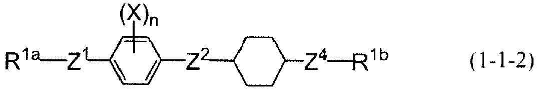 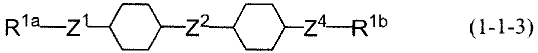
in the formulae (1-1-1) to (1-1-3),
Z¹, Z² and Z⁴ are independently single bonds, -(CH₂)ₐ-, -O(CH₂)ₐ-, -(CH₂)ₐO-, - O(CH₂)ₐO-, -COO-, -OCO-, -CH=CH-COO-, -OCO-CH=CH-, -(CH₂)ₐ-COO-, -OCO-(CH₂)ₐ-, - CH=CH-, -SO₂-, -OCF₂- or -CF₂O-; here, a is an integer of 1 to 20,
X is fluorine or methyl,
n is an integer of 0 to 4,
in a case where there is a plurality of X's in the formula, including when n is 2 or more, X's are optionally the same as or different from each other,
R^{1a} and R^{1b} are independently polymerizable groups represented by the formula (PG-1) or (PG-5), 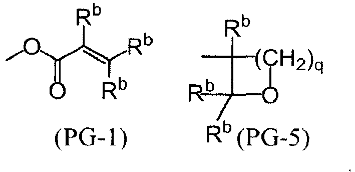
in the formulae (PG-1) and (PG-5), R^{b} is hydrogen, a halogen, -CF₃ or an alkyl having 1 to 5 carbon atoms, η is 0 or 1, and, in a case where there is a plurality of R^{b}'s in the formula, R^{b}'s are optionally the same as or different from each other.

5. The composition for forming a low dielectric constant resin according to Claim 1, containing a liquid crystal compound having a polymerizable group at an end, which is represented by any of formulae (1-2-1) to (1-2-6), 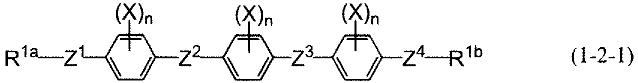 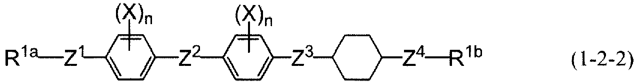 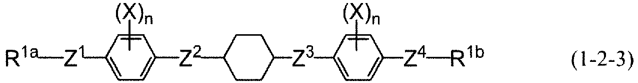 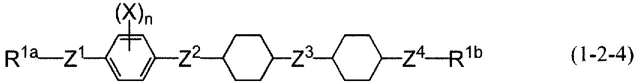 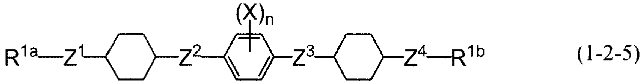 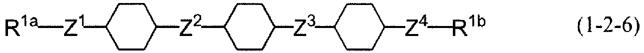
in the formulae (1-2-1) to (1-2-6),
Z¹, Z², Z³ and Z⁴ are independently single bonds, -(CH₂)ₐ-, -O(CH₂)ₐ-, -(CH₂)ₐO-, - O(CH₂)ₐO-, -COO-, -OCO-, -CH=CH-COO-, -OCO-CH=CH-, -CH₂CH₂-COO-, -OCO-CH₂CH₂-, -SO₂-, -CH=CH-, -OCF₂- or -CF₂O-; here, a is an integer of 1 to 20,
X is fluorine or methyl,
n is an integer of 0 to 4,
in a case where there is a plurality of X's in the formula, including when n is 2 or more, X's are optionally the same as or different from each other,
R^{1a} and R^{1b} are independently polymerizable groups represented by the formula (PG-1) or (PG-5), 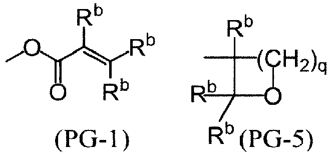
in the formulae (PG-1) and (PG-5), R^{b} is hydrogen, a halogen, -CF₃ or an alkyl having 1 to 5 carbon atoms, q is 0 or 1, and, in a case where there is a plurality of R^{b}'s in the formula, R^{b}'s are optionally the same as or different from each other.

6. The composition for forming a low dielectric constant resin according to Claim 1, containing a liquid crystal compound having a polymerizable group at an end, which is represented by any of formulae (1-3-1) to (1-3-9), 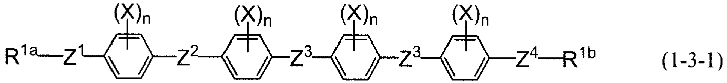 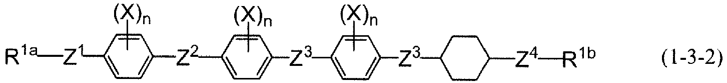 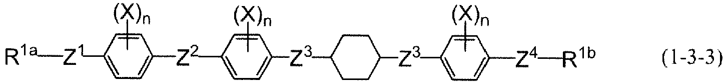 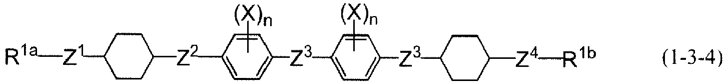 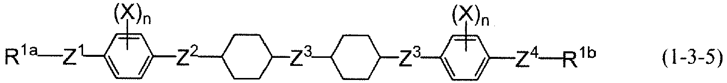 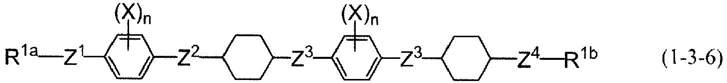 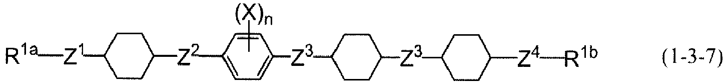 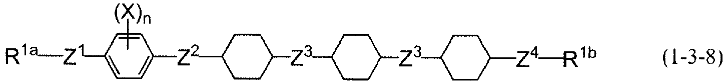 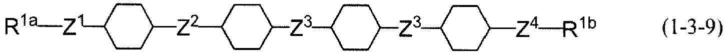
in the formulae (1-3-1) to (1-3-9),
Z¹, Z², Z³ and Z⁴ are independently single bonds, -(CH₂)ₐ-, -O(CH₂)ₐ-, -(CH₂)ₐO-, - O(CH₂)ₐO-, -CH=CH-, -COO-, -OCO-, -CH=CH-COO-, -OCO-CH=CH-, -(CH₂)ₐ-COO-, -OCO-(CH₂)ₐ-, -CH=CH-, -SO₂-, -CH=CH-, -OCF₂- or -CF₂O-; here, a is an integer of 1 to 20,
Z³'s in the formula are optionally the same as or different from each other,
X is fluorine or methyl,
n is an integer of 0 to 4,
in a case where there is a plurality of X's in the formula, including when n is 2 or more, X's are optionally the same as or different from each other,
R^{1a} and R^{1b} are independently polymerizable groups represented by the formula (PG-1) or (PG-5), 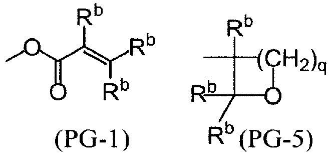
in the formulae (PG-1) and (PG-5), R^{b} is hydrogen, a halogen, -CF₃ or an alkyl having 1 to 5 carbon atoms, q is 0 or 1, and, in a case where there is a plurality of R^{b}'s in the formula, R^{b}'s are optionally the same as or different from each other.

7. The composition for forming a low dielectric constant resin according to Claim 1,
wherein, in the formula (1), R^{1a} and R1^{b} are polymerizable groups represented by the formula (PG-1), 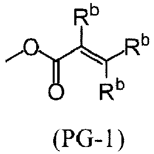
in the formulae (PG-1), R^{b} is hydrogen, a halogen, -CF₃ or an alkyl having 1 to 5 carbon atoms, and, in a case where there is a plurality of R^{b}'s in the formula, R^{b}'s are optionally the same as or different from each other.

8. A compound represented by a formula (1-1-1a) or (1-2-1a),
wherein relative permittivity at 10 GHz of a cured product of a composition containing the compound becomes lower than 3.0, 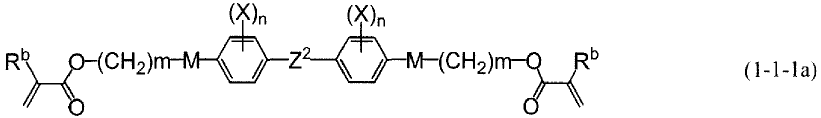 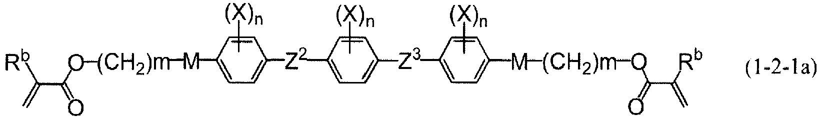
in the formulae (1-1-1a) and (1-2-1a),
R^{b} is hydrogen, a halogen, -CF₃ or an alkyl having 1 to 5 carbon atoms,
Z² and Z³ are independently single bonds, -(CH₂)ₐ-, -O(CH₂)ₐ-, -(CH₂)ₐO-, -O(CH₂)ₐO-, - COO-, -OCO-, -CH=CH-COO-, -OCO-CH=CH-, -(CH₂)ₐ-COO-, -OCO-(CH₂)ₐ-, -CH=CH-, - SO₂-, -OCF₂- or -CF₂O-; here, a is an integer of 1 to 20,
m is an integer of 0 to 20,
M is a single bond or oxygen,
X is fluorine or methyl,
n is an integer of 0 to 4,
in a case where there is a plurality of X's in the formula, including when n is 2 or more, X's are optionally the same as or different from each other,
in a case where there is a plurality of R^{b}'s, m's or M's in the formula, R^{b}'s, m's or M's are optionally the same as or different from each other.

9. A compound represented by a formula (1-1-2a), (1-1-3a), (1-2-5a) or (1-2-6a),
wherein relative permittivity at 10 GHz of a cured product of a composition containing the compound becomes lower than 3.0, 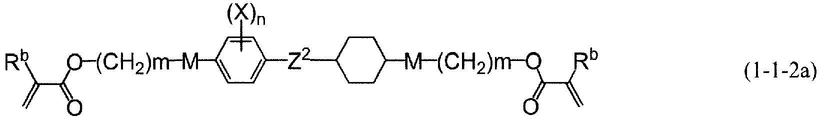 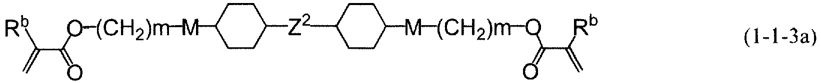 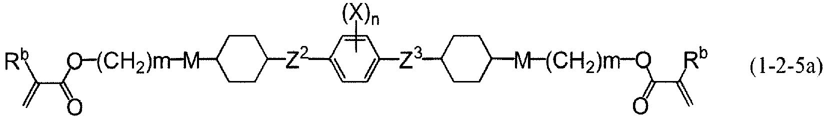 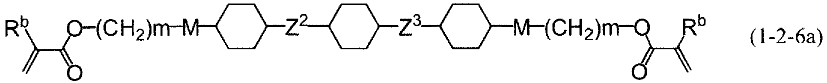
in the formulae (1-1-2a), (1-1-3a), (1-2-5a) and (1-2-6a),
R^{b} is hydrogen, a halogen, -CF₃ or an alkyl having 1 to 5 carbon atoms,
Z² and Z³ are independently single bonds, -(CH₂)ₐ-, -O(CH₂)ₐ-, -(CH₂)ₐO-, -O(CH₂)ₐO-, - COO-, -OCO-, -CH=CH-COO-, -OCO-CH=CH-, -(CH₂)ₐ-COO-, -OCO-(CH₂)ₐ-, -CH=CH-, - SO₂-, -OCF₂- or -CF₂O-; here, a is an integer of 1 to 20,
m is an integer of 0 to 20,
M is a single bond or oxygen,
X is fluorine or methyl,
n is an integer of 0 to 4,
in a case where there is a plurality of X's in the formula, including when n is 2 or more, X's are optionally the same as or different from each other,
in a case where there is a plurality of R^{b}'s, m's or M's in the formula, R^{b}'s, m's or M's are optionally the same as or different from each other.

10. The composition for forming a low dielectric constant resin according to any one of Claims 1 to 7, comprising:
a non-polymerizable liquid crystal compound.

11. A composition for forming a low dielectric constant resin comprising the composition according to any one of Claims 1 to 7 and 10 and an inorganic filling agent,
wherein thermal conductivity of a cured product of the composition is 1 W/m·K or more.

12. A composition for forming a low dielectric constant resin comprising the composition according to any one of Claims 1 to 7 and 10 and an inorganic filling agent,
wherein thermal conductivity of a cured product of the composition is 1 W/m-K or more or
comprising the composition for forming a low dielectric constant resin according to any one of Claims I to 7 and 10 and a nitride filling agent.
wherein thermal conductivity of a cured product of the composition is 10 W/m·K or more.

13. The composition for forming a low dielectric constant resin according to Claim 12,
wherein an inorganic filling material is at least one selected from aluminum nitride, boron nitride, silicon nitride, diamond, graphite, silicon carbide, magnesium oxide, aluminum oxide, zinc oxide, silicon oxide, titanium oxide, tin oxide, holmium oxide, calcium oxide, magnesium hydroxide, a metal oxide of aluminum hydroxide, and cordierite and mullite.

14. The composition for forming a low dielectric constant resin according to Claim 12,
wherein an inorganic filling material is aluminum nitride, boron nitride, silicon nitride, magnesium oxide, aluminum oxide, zinc oxide, silicon oxide, titanium oxide or magnesium hydroxide.

15. A low dielectric constant resin insulation film that is a polymer compact obtained by curing the composition for forming a low dielectric constant resin according to any one of Claims 1 to 7 and 10 to 14 with heat or an ultraviolet ray.

16. A low dielectric constant resin film or low dielectric constant resin sheet that is a polymer compact obtained by curing the composition for forming a low dielectric constant resin according to any one of Claims 1 to 7 and 10 to 14 with heat or an ultraviolet ray.

17. A low dielectric constant resin part that is a polymer compact obtained by curing the composition for forming a low dielectric constant resin according to any one of Claims 1 to 7 and 10 to 14 with heat or an ultraviolet ray.

18. An electronic device using the polymer-forming body according to any one of Claims 15 to 17.
